(19) Europäisches Patentamt
European Patent Office
Office européen des brevets

(11) EP 2 313 344 B1

(12) **FASCICULE DE BREVET EUROPEEN**

(45) Date de publication et mention de la délivrance du brevet:
**07.09.2016 Bulletin 2016/36**

(21) Numéro de dépôt: **09784315.5**

(22) Date de dépôt: **29.07.2009**

(51) Int Cl.:
*C01B 39/48* (2006.01) *B01J 29/70* (2006.01)
*C10G 2/00* (2006.01) *C10G 45/60* (2006.01)
*C10G 47/16* (2006.01) *B01J 29/74* (2006.01)
*B01J 29/76* (2006.01) *B01J 29/78* (2006.01)
*B01J 35/00* (2006.01) *B01J 37/02* (2006.01)
*B01J 37/03* (2006.01) *B01J 37/08* (2006.01)
*C10G 45/62* (2006.01) *C10G 45/64* (2006.01)
*C10G 47/18* (2006.01) *C10G 47/20* (2006.01)
*C10G 65/04* (2006.01) *C10G 65/12* (2006.01)

(86) Numéro de dépôt international:
**PCT/FR2009/000943**

(87) Numéro de publication internationale:
**WO 2010/015737 (11.02.2010 Gazette 2010/06)**

(54) **PROCEDE DE PRODUCTION DE DISTILLATS MOYENS PAR HYDROCRAQUAGE DE CHARGES ISSUES DU PROCÉDÉ FISCHER-TROPSCH EN PRESENCE D'UN CATALYSEUR COMPRENANT UN SOLIDE IZM-2**

VERFAHREN ZUR HERSTELLUNG VON MITTELDESTILLATEN DURCH HYDROCRACKEN VON EINSATZSTOFFEN, DIE SICH AUS DEM FISCHER-TROPSCH-VERFAHREN ERGEBEN, IN GEGENWART EINES EINEN IZM-2-FESTSTOFF UMFASSENDEN KATALYSATORS

PROCESS FOR PRODUCING MIDDLE DISTILLATES BY HYDROCRACKING OF FEEDSTOCKS RESULTING FROM THE FISCHER-TROPSCH PROCESS IN THE PRESENCE OF A CATALYST COMPRISING AN IZM-2 SOLID

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **08.08.2008 FR 0804560**

(43) Date de publication de la demande:
**27.04.2011 Bulletin 2011/17**

(73) Titulaires:
- **IFP Énergies nouvelles**
**92852 Rueil-Malmaison Cedex (FR)**
- **ENI S.p.A.**
**00144 Roma (IT)**

(72) Inventeurs:
- **BOUCHY, Christophe**
**F-69007 Lyon (FR)**
- **GUILLON, Emmanuelle**
**F-69390 Vernaison (FR)**

(56) Documents cités:
**EP-A- 1 702 888** **EP-A- 1 953 118**
**WO-A-03/004584** **WO-A-2009/004131**
**WO-A2-2009/144411** **WO-A2-2009/144412**
**US-A- 4 539 193** **US-A- 5 207 893**
**US-A1- 2002 144 929** **US-A1- 2002 169 218**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 313 344 B1

## Description

La présente invention concerne un procédé de production de distillats moyens à partir d'une charge paraffinique produite par synthèse Fischer-Tropsch, mettant en oeuvre un catalyseur d'hydrocraquage/hydroisomérisation comprenant au moins un métal hydro-déshydrogénant choisi dans le groupe formé par les métaux du groupe VIB et du groupe VIII de la classification périodique et un support comprenant au moins un solide cristallisé IZM-2, présentant une composition chimique, exprimée sur une base anhydre, en termes de moles d'oxydes, par la formule générale suivante : $XO_2 : aY_2O_3 : bM_{2/n}O$ dans laquelle X représente au moins un élément tétravalent, Y représente au moins un élément trivalent et M est au moins un métal alcalin et/ou un métal alcalino-terreux de valence n, a et b représentant respectivement le nombre de moles de $Y_2O_3$ et $M_{2/n}O$ et a est compris entre 0 et 0,5 et b est compris entre 0 et 1.

## Art antérieur

Dans le procédé Fischer-Tropsch, le gaz de synthèse ($CO+H_2$) est transformé catalytiquement en produits oxygénés et en hydrocarbures essentiellement linéaires sous forme gazeuse, liquide ou solide. Ces produits sont généralement exempts d'impuretés hétéroatomiques telles que, par exemple, le soufre, l'azote ou des métaux. Ils ne contiennent également pratiquement peu ou pas d'aromatiques, de naphtènes et plus généralement de cycles en particulier dans le cas de catalyseurs au cobalt. Par contre, ils peuvent présenter une teneur non négligeable en produits oxygénés qui, exprimée en poids d'oxygène, est généralement inférieure à 5% en poids environ et également une teneur en insaturés (produits oléfiniques en général) généralement inférieure à 10% en poids. Cependant, ces produits, principalement constitués de normales paraffines, ne peuvent être utilisés tels quels, notamment à cause de leurs propriétés de tenue à froid peu compatibles avec les utilisations habituelles des coupes pétrolières. Par exemple, le point d'écoulement d'un hydrocarbure linéaire contenant 20 atomes de carbone par molécule (température d'ébullition égale à 340°C environ c'est à dire souvent comprise dans la coupe distillats moyens) est de +37°C environ ce qui rend son utilisation impossible, la spécification étant de -15°C pour le gazole.

Les charges de départ destinées à être traitées dans une unité de gazéification produisant un gaz essentiellement constitué de monoxyde de carbone et d'hydrogène, connu par l'homme du métier sous le nom de gaz de synthèse, ledit gaz de synthèse permettant ensuite de recomposer un ensemble de coupes hydrocarbures au moyen du procédé Fischer Tropsch peuvent être issues de sources renouvelables telle que par exemple des charges de type lignocellulosique, telles que des déchets de bois ou de paille. Les produits lignocellulosiques sont principalement formés de lignines et de cellulose. Les impuretés contenues dans ce type de charge biomasse lignocellulosiques sont essentiellement des impuretés solides, des métaux en particulier alcalins ( Na, K), et des composés soufrés, ainsi que des composés chlorés et azotés.

Les charges de départ peuvent également être issues de sources renouvelables, telles que les huiles et graisses d'origine végétale ou animale, ou des mélanges de telles charges, contenant des triglycérides et/ou des acides gras et/ou des esters. Parmi les huiles végétales possibles, elles peuvent être brutes ou raffinées, totalement ou en partie, et issues des végétaux suivants : colza, tournesol, soja, palme, palmiste, olive, noix de coco, jatropha cette liste n'étant pas limitative. Les huiles d'algues ou de poisson sont également pertinentes. Parmi les graisses possibles, on peut citer toutes les graisses animales telles que le lard ou les graisses composés de résidus de l'industrie alimentaire ou issus des industries de la restauration. Les charges ainsi définies contiennent des structures triglycérides et/ou acides gras, dont les chaînes grasses contiennent un nombre d'atomes de carbone compris entre 8 et 25.

Les charges de départ destinées à être traitées dans une unité de gazéification produisant un gaz essentiellement constitué de monoxyde de carbone et d'hydrogène, connu par l'homme du métier sous le nom de gaz de synthèse, ledit gaz de synthèse permettant ensuite de recomposer un ensemble de coupes hydrocarbures au moyen du procédé Fischer Tropsch peuvent également être issues du charbon finement moulu et purifié de manière à contenir une concentration en cendre réduite.

Les hydrocarbures issus du procédé Fischer-Tropsch comprenant majoritairement des n-paraffines doivent être transformés en produits plus valorisables tels que par exemple le gazole, kérosène, qui sont obtenus, par exemple, après des réactions catalytiques d'hydroisomérisation.

Tous les catalyseurs utilisés actuellement en hydroisomérisation/hydrocraquage sont du type bifonctionnels associant une fonction acide à une fonction hydrogénante. La fonction acide est apportée par des supports de grandes surfaces (150 à 800 $m^2.g^{-1}$ généralement) présentant une acidité superficielle, telles que les alumines halogénées (chlorées ou fluorées notamment), les alumines phosphorées, les combinaisons d'oxydes de bore et d'aluminium, et les silice-alumines. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI tels que chrome, molybdène et tungstène et au moins un métal du groupe VIII.

L'équilibre entre les deux fonctions acide et hydrogénante est l'un des paramètres qui régissent l'activité et la

sélectivité du catalyseur. Une fonction acide faible et une fonction hydrogénante forte donnent des catalyseurs peu actifs et sélectifs envers l'isomérisation alors qu'une fonction acide forte et une fonction hydrogénante faible donnent des catalyseurs très actifs et sélectifs envers le craquage. Une troisième possibilité est d'utiliser une fonction acide forte et une fonction hydrogénante forte afin d'obtenir un catalyseur très actif mais également très sélectif envers l'isomérisation. Il est donc possible, en choisissant judicieusement chacune des fonctions d'ajuster le couple activité/sélectivité du catalyseur.

Les catalyseurs conventionnels de l'hydrocraquage catalytique sont, pour leur grande majorité, constitués de supports faiblement acides, tels les silice-alumines par exemple. Ces systèmes sont plus particulièrement utilisés pour produire des distillats moyens de très bonne qualité. Dans les supports peu acides, on trouve la famille des silices-alumines. Beaucoup de catalyseurs du marché de l'hydrocraquage sont à base de silice-alumine associée à un métal du groupe VIII. Ces systèmes ont une très bonne sélectivité en distillats moyens, et les produits formés sont de bonne qualité (US6733657). L'inconvénient de tous ces systèmes catalytiques à base de silice-alumine est, comme on l'a dit, leur faible activité. En revanche, les systèmes catalytiques à base de zéolithe (en particulier zéolithe USY ou beta) sont très actifs pour la réaction d'hydrocraquage mais peu sélectifs.

En tentant de développer des catalyseurs d'hydrocraquage et d'hydroisomérisation de charge paraffiniques telles que les charges issues de la synthèse de Fischer-Tropsch, la demanderesse a découvert un procédé de production de distillats moyens à partir d'une charge paraffinique produite par synthèse Fischer-Tropsch, mettant en oeuvre un catalyseur nouveau d'hydrocraquage/hydroisomérisation comprenant au moins un métal hydro-déshydrogénant choisi dans le groupe formé par les métaux du groupe VIB et du groupe VIII de la classification périodique et un support comprenant au moins un solide cristallisé IZM-2.

## Objet de l'invention

La présente invention concerne donc un procédé pour la production de distillats moyens. Ce procédé permet d'augmenter la quantité de distillats moyens disponibles par hydrocraquage des composés paraffiniques les plus lourds, présents dans l'effluent de sortie de l'unité Fischer-Tropsch, et qui ont des points d'ébullition supérieurs à ceux des coupes kérosène et gazole, par exemple la fraction 370°C$^+$.

Plus précisément l'invention concerne un procédé de production de distillats moyens à partir d'une charge paraffinique produite par synthèse Fischer-Tropsch mettant en oeuvre un catalyseur particulier tel que défini dans la description qui suit.

La présente invention concerne un procédé de production de distillats moyens à partir d'une charge paraffinique produite par synthèse Fischer-Tropsch, mettant en oeuvre un catalyseur d'hydrocraquage et d'hydroisomérisation comprenant au moins un métal hydro-déshydrogénant choisi dans le groupe formé par les métaux du groupe VIB et du groupe VIII de la classification périodique et un support comprenant au moins un solide cristallisé IZM-2 selon revendication 1, ledit procédé opérant avantageusement à une température comprise entre 270 et 400°C, une pression comprise entre 1 et 9 MPa, une vitesse spatiale comprise entre 0,5 et 5 $h^{-1}$, un débit d'hydrogène ajusté pour obtenir un rapport de 400 à 1500 Normaux litres d'hydrogène par litre de charge.

## Description détaillée de l'invention

La présente invention concerne un procédé de production de distillats moyens à partir d'une charge paraffinique produite par synthèse Fischer-Tropsch, mettant en oeuvre un catalyseur d'hydrocraquage/hydroisomérisation comprenant au moins un métal hydro-déshydrogénant choisi dans le groupe formé par les métaux du groupe VIB et du groupe VIII de la classification périodique et un support comprenant au moins un solide cristallisé IZM-2 selon revendication 1 présentant un diagramme de diffraction des rayons X incluant au moins les raies inscrites dans le tableau ci-dessous :

| 2 thêta (°) | dhkl (Å) | Irel | 2 thêta (°) | dhkl (Å) | Irel |
|---|---|---|---|---|---|
| 5,07 | 17,43 | ff | 19,01 | 4,66 | ff |
| 7,36 | 12,01 | FF | 19,52 | 4,54 | ff |
| 7,67 | 11,52 | FF | 21,29 | 4,17 | m |
| 8,78 | 10,07 | F | 22,44 | 3,96 | f |
| 10,02 | 8,82 | ff | 23,10 | 3,85 | mf |
| 12,13 | 7,29 | ff | 23,57 | 3,77 | f |
| 14,76 | 6,00 | ff | 24,65 | 3,61 | ff |

(suite)

| 2 thêta (°) | dhkl (Å) | Irel | 2 thêta (°) | dhkl (Å) | Irel |
|---|---|---|---|---|---|
| 15,31 | 5,78 | ff | 26,78 | 3,33 | f |
| 15,62 | 5,67 | ff | 29,33 | 3,04 | ff |
| 16,03 | 5,52 | ff | 33,06 | 2,71 | ff |
| 17,60 | 5,03 | ff | 36,82 | 2,44 | ff |
| 18,22 | 4,87 | ff | 44,54 | 2,03 | ff |

où FF = très fort ; F = fort ; m = moyen ; mf = moyen faible ; f = faible ; ff = très faible et présentant une composition chimique, exprimée sur une base anhydre, en termes de moles d'oxydes, par la formule générale suivante : $XO_2$ : $aY_2O_3$ : $bM_{2/n}O$ dans laquelle X représente au moins un élément tétravalent, Y représente au moins un élément trivalent et M est au moins un métal alcalin et/ou un métal alcalino-terreux de valence n, a et b représentant respectivement le nombre de moles de $Y_2O_3$ et $M_{2/n}O$ et a est compris entre 0 et 0,5 et b est compris entre 0 et 1.

Ledit procédé opère avantageusement à une température comprise entre 270 et 400°C et de préférence entre 300 et 390 °C, à une pression comprise entre 1 et 9 MPa et de préférence comprise entre 2 et 8 MPa, à une vitesse spatiale comprise entre 0,5 et 5 $h^{-1}$ et de préférence comprise entre 0,8 et 3 $h^{-1}$, et à un débit d'hydrogène ajusté pour obtenir un rapport de 400 à 1500 Normaux litres d'hydrogène par litre de charge et de préférence un rapport de 600 et 1300 Normaux litres d'hydrogène par litre de charge.

<u>**Le catalyseur d'hydrocraquage et d'hydroisomérisation**</u>

De préférence, ledit catalyseur d'hydrocraquage et hydroisomérisation comprend de0,1 à 60%, de préférence de 0,1 à 50% et de manière encore plus préférée de 0,1 à 40% d'au moins un métal hydro-déshydrogénant choisi dans le groupe formé par les métaux du groupe VIB et du groupe VIII, et de 40 à 99,9% d'un support comprenant :

- 0 à 99% et de préférence 2 à 98%, de préférence de 5 à 95% d'au moins un liant minéral poreux amorphe ou mal cristallisé de type oxyde
- 0,01 à 60%, de préférence de 0,05 à 40%, de manière préférée, de 0,05 à 35% et de manière très préférée, de 0,05 à 20% d'un solide cristallisé de type IZM-2,

les pourcentages étant exprimés en pourcentage poids par rapport à la masse totale du catalyseur.

**a) La fonction hydro-déshydrogénante**

Conformément à l'invention, le catalyseur comprend au moins un métal hydro-déshydrogénant choisi dans le groupe formé par les métaux du groupe VIII et les métaux du groupe VIB, pris seuls ou en mélange.

De préférence, les éléments du groupe VIII sont choisis parmi le fer, le cobalt, le nickel, le ruthénium, le rhodium, le palladium, l'osmium, l'iridium ou le platine, pris seuls ou en mélange.

Dans le cas où les éléments du groupe VIII sont choisis parmi les métaux nobles du groupe VIII, les éléments du groupe VIII sont avantageusement choisis parmi le platine et le palladium.

Dans le cas où les éléments du groupe VIII sont choisis parmi les métaux non nobles du groupe VIII, les éléments du groupe VIII sont avantageusement choisis parmi le fer, le cobalt et le nickel.

De préférence, les éléments du groupe VIB du catalyseur selon la présente invention sont choisis parmi le tungstène et le molybdène.

Dans le cas où la fonction hydrogénante comprend un élément du groupe VIII et un élément du groupe VIB, les associations de métaux suivants sont préférées : nickel-molybdène, cobalt-molybdène, fer-molybdène, fer-tungstène, nickel-tungstène, cobalt-tungstène, et de manière très préférée : nickel-molybdène, cobalt-molybdène, nickel-tungstène. Il est également possible d'utiliser des associations de trois métaux tel que par exemple nickel-cobalt-molybdène. Lorsqu'une combinaison de métaux du groupe VIB et du groupe VIII est utilisée, le catalyseur est alors préférentiellement utilisé sous une forme sulfurée.

La teneur en élément hydro-déshydrogénant dudit catalyseur selon la présente invention choisi dans le groupe formé par les métaux du groupe VIB et du groupe VIII est avantageusement comprise entre 0,1 et 60% poids par rapport à la masse totale dudit catalyseur de préférence entre 0,1 et 50% poids et de manière très préférée entre 0,1 et 40% poids.

Lorsque l'élément hydro-déshydrogénant est un métal noble du groupe VIII, le catalyseur renferme de préférence une teneur en métal noble comprise entre 0,05 et 10% poids, de manière encore plus préférée de 0,1 à 5% poids par rapport à la masse totale dudit catalyseur.

**b) Le solide cristallisé IZM-2**

Conformément à l'invention, le support du catalyseur selon l'invention comprend au moins un solide cristallisé IZM-2 selon revendication 1 présentant une composition chimique exprimée sur une base anhydre, en termes de moles d'oxydes, par la formule générale suivante : $XO_2$ : $aY_2O_3$ : $bM_{2/n}O$ dans laquelle X représente au moins un élément tétravalent, Y représente au moins un élément trivalent et M est au moins un métal alcalin et/ou un métal alcalino-terreux de valence n, a et b représentant respectivement le nombre de moles de $Y_2O_3$ et $M_{2/n}O$ et a est compris entre 0 et 0,5 et b est compris entre 0 et 1.

Conformément à l'invention, le solide cristallisé IZM-2 utilisé dans le support du catalyseur mis en oeuvre dans le procédé selon l'invention présente un diagramme de diffraction de rayons X incluant au moins les raies inscrites dans le tableau 1. Ce nouveau solide cristallisé IZM-2 présente une nouvelle structure cristalline.

Ce diagramme de diffraction est avantageusement obtenu par analyse radiocristallographique au moyen d'un diffractomètre en utilisant la méthode classique des poudres avec le rayonnement $K\alpha1$ du cuivre ($\lambda$ = 1,5406Å). A partir de la position des pics de diffraction représentée par l'angle $2\theta$, on calcule, par la relation de Bragg, les équidistances réticulaires $d_{hkl}$ caractéristiques de l'échantillon. L'erreur de mesure $\Delta(d_{hkl})$ sur $d_{hkl}$ est calculée grâce à la relation de Bragg en fonction de l'erreur absolue $\Delta(2\theta)$ affectée à la mesure de $2\theta$. Une erreur absolue $\Delta(2\theta)$ égale à $\pm$ 0,02° est communément admise. L'intensité relative $I_{rel}$ affectée à chaque valeur de $d_{hkl}$ est mesurée d'après la hauteur du pic de diffraction correspondant. Le diagramme de diffraction des rayons X du solide cristallisé IZM-2 selon l'invention comporte au moins les raies aux valeurs de $d_{hkl}$ données dans le tableau 1. Dans la colonne des $d_{hkl}$, on a indiqué les valeurs moyennes des distances inter-réticulaires en Angströms (A). Chacune de ces valeurs doit être affectée de l'erreur de mesure $\Delta(d_{hkl})$ comprise entre $\pm$ 0,6Å et $\pm$ 0,01Å.

Tableau 1 : Valeurs moyennes des $d_{hkl}$ et intensités relatives mesurées sur un diagramme de diffraction de rayons X du solide cristallisé IZM-2 calciné

| 2 thêta (°) | $d_{hkl}$ (Å) | $I_{rel}$ | 2 thêta (°) | dhkl (Å) | $I_{rel}$ |
|---|---|---|---|---|---|
| 5,07 | 17,43 | ff | 19,01 | 4,66 | ff |
| 7,36 | 12,01 | FF | 19,52 | 4,54 | ff |
| 7,67 | 11,52 | FF | 21,29 | 4,17 | m |
| 8,78 | 10,07 | F | 22,44 | 3,96 | f |
| 10,02 | 8,82 | ff | 23,10 | 3,85 | mf |
| 12,13 | 7,29 | ff | 23,57 | 3,77 | f |
| 14,76 | 6,00 | ff | 24,65 | 3,61 | ff |
| 15,31 | 5,78 | ff | 26,78 | 3,33 | f |
| 15,62 | 5,67 | ff | 29,33 | 3,04 | ff |
| 16,03 | 5,52 | ff | 33,06 | 2,71 | ff |
| 17,60 | 5,03 | ff | 36,82 | 2,44 | ff |
| 18,22 | 4,87 | ff | 44,54 | 2,03 | ff |

L'intensité relative $I_{rel}$ est donnée en rapport à une échelle d'intensité relative où il est attribué une valeur de 100 à la raie la plus intense du diagramme de diffraction des rayons X : ff <15 ; 15 ≤f <30 ; 30 ≤ mf <50 ; 50 ≤m < 65 ; 65 ≤F < 85 ; FF ≥ 85.

Le solide cristallisé IZM-2 utilisé dans le support du catalyseur mis en oeuvre dans le procédé selon l'invention présente avantageusement une nouvelle structure cristalline de base ou topologie qui est caractérisée par son diagramme de diffraction X sous la forme calcinée donné par la figure 1.

Ledit solide IZM-2 présente une composition chimique exprimée sur une base anhydre, en termes de moles d'oxydes, définie par la formule générale suivante : $XO_2$ : $aY_2O_3$ : $bM_{2/n}O$, dans laquelle X représente au moins un élément tétravalent, Y représente au moins un élément trivalent et M est au moins un métal alcalin et/ou un métal alcalino-terreux de valence n. Dans ladite formule donnée ci-dessus, a représente le nombre de moles de $Y_2O_3$ et a est

compris entre 0 et 0,5, très préférentiellement compris entre 0 et 0,05 et de manière encore plus préférée entre et 0,0016 et 0,02 et b représente le nombre de moles de $M_{2/n}O$ et est compris entre 0 et 1, de préférence entre 0 et 0,5 et de manière encore plus préférée entre 0,005 et 0,5.

De préférence, X est choisi parmi le silicium, le germanium, le titane et le mélange d'au moins deux de ces éléments tétravalents, très préférentiellement X est le silicium et Y est préférentiellement choisi parmi l'aluminium, le bore, le fer, l'indium et le gallium, très préférentiellement Y est l'aluminium. M est préférentiellement choisi parmi le lithium, le sodium, le potassium, le calcium, le magnésium et le mélange d'au moins deux de ces métaux et très préférentiellement M est le sodium. De manière préférée, X représente le silicium, ledit solide cristallisé IZM-2 est alors un solide entièrement silicique lorsque l'élément Y est absent de la composition dudit solide IZM-2. Il est également avantageux d'employer comme élément X un mélange de plusieurs éléments X, en particulier un mélange de silicium avec un autre élément X choisi parmi le germanium et le titane, de préférence le germanium. Ainsi, lorsque le silicium est présent en mélange avec un autre élément X, ledit solide cristallisé IZM-2 est alors un métallosilicate cristallisé présentant un diagramme de diffraction des rayons X identique à celui décrit dans le tableau 1 lorsqu'il se trouve sous sa forme calcinée. De manière encore plus préférée et en présence d'un élément Y, X étant le silicium et Y étant l'aluminium : ledit solide cristallisé IZM-2 est alors un aluminosilicate cristallisé présentant un diagramme de diffraction des rayons X identique à celui décrit dans le tableau 1 lorsqu'il se trouve sous sa forme calcinée.

D'une manière plus générale, ledit solide IZM-2 utilisé dans le support du catalyseur mis en oeuvre dans le procédé selon l'invention présente avantageusement une composition chimique exprimée par la formule générale suivante : $XO_2 : aY_2O_3 : bM_{2/n}O : cR : dH_2O$ dans laquelle R représente une espèce organique comportant deux atomes d'azote quaternaires, X représente au moins un élément tétravalent, Y représente au moins un élément trivalent et M est un métal alcalin et/ou un métal alcalino-terreux de valence n ; a, b, c et d représentant respectivement le nombre de moles de $Y_2O_3$, $M_{2/n}O$, R et $H_2O$ et a est compris entre 0 et 0,5, b est compris entre 0 et 1, c est compris entre 0 et 2 et d est compris entre 0 et 2. Cette formule et les valeurs prises par a, b, c et d sont celles pour lesquelles ledit solide IZM-2 se trouve préférentiellement sous sa forme calcinée.

Plus précisément, ledit solide IZM-2, sous sa forme brute de synthèse, présente avantageusement une composition chimique exprimée par la formule générale suivante : $XO_2 : aY_2O_3 : bM_{2/n}O : cR : dH_2O$ (I) dans laquelle R représente une espèce organique comportant deux atomes d'azote quaternaires, X représente au moins un élément tétravalent, Y représente au moins un élément trivalent et M est un métal alcalin et/ou un métal alcalino-terreux de valence n ; a, b, c et d représentant respectivement le nombre de moles de $Y_2O_3$, $M_{2/n}O$, R et $H_2O$ et a est compris entre 0 et 0,5, b est compris entre 0 et 1, c est compris entre 0,005 et 2 et de préférence entre 0,01 et 0,5, et d est compris entre 0,005 et 2 et de préférence entre 0,01 et 1.

Dans la formule (I) donnée ci-dessus pour définir la composition chimique dudit solide cristallisé IZM-2 sous sa forme brute de synthèse, la valeur de a est comprise entre 0 et 0,5, très préférentiellement comprise entre 0 et 0,05 et de manière encore plus préférée comprise entre 0,0016 et 0,02. De manière préférée, b est compris entre 0 et 1, de manière très préférée b est compris entre 0 et 0,5 et de manière encore plus préférée b est compris entre 0,005 et 0,5. La valeur de c est comprise entre 0,005 et 2, avantageusement entre 0,01 et 0,5. La valeur prise par d est comprise entre 0,005 et 2, de préférence comprise entre 0,01 et 1.

Sous sa forme brute de synthèse, c'est-à-dire directement issu de la synthèse et préalablement à toute étape de calcination(s) bien connue de l'Homme du métier, ledit solide IZM-2 comporte avantageusement au moins l'espèce organique R ayant deux atomes d'azote quaternaires telle que celle décrite ci-après ou encore ses produits de décomposition ou encore ses précurseurs. Selon un mode préféré de l'invention, dans la formule (I) donnée ci-dessus, l'élément R est le 1,6-bis(méthylpiperidinium)hexane dont la formule développée est donnée ci-dessous. Ladite espèce organique R, qui joue le rôle de structurant, peut être éliminée par les voies classiques connues de l'état de la technique comme des traitements thermiques et/ou chimiques.

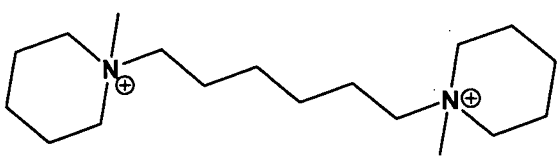

Un procédé de préparation dudit solide cristallisé IZM-2 consiste à faire réagir un mélange aqueux appelé gel comportant au moins une source d'au moins un oxyde $XO_2$, éventuellement au moins une source d'au moins un oxyde $Y_2O_3$, éventuellement au moins une source d'au moins un métal alcalin et/ou alcalino-terreux de valence n, au moins une espèce organique R comportant deux atomes d'azote quaternaires, le mélange présentant la composition molaire suivante:

$XO_2/Y_2O_3$: au moins 2, de préférence au moins 20, de manière plus préférée de 60 à 600,

$H_2O/XO_2$: 1 à 100, de préférence de 10 à 70,
$R/XO_2$: 0,02 à 2, de préférence de 0,05 à 0,5,
$M_{2/n}O/XO_2$: 0 à 1, de préférence de 0,005 et 0,5,
où X est un ou plusieurs élément(s) tétravalent(s) choisi(s) dans le groupe formé par les éléments suivants : silicium, germanium, titane, de préférence le silicium, où Y est un ou plusieurs élément(s) trivalent(s) choisi(s) dans le groupe formé par les éléments suivants: aluminium, fer, bore, indium et gallium, de préférence l'aluminium et où M est un ou plusieurs métal(aux) alcalin(s) et/ou alcalino-terreux choisi(s) parmi le lithium, le sodium, le potassium, le calcium, le magnésium et le mélange d'au moins deux de ces métaux de préférence le sodium.

Conformément au procédé de préparation dudit solide cristallisé IZM-2, R est avantageusement une espèce organique ayant deux atomes d'azote quaternaires jouant le rôle de structurant organique. Préférentiellement, R est le composé azoté 1,6-bis(méthylpiperidinium)hexane. Les anions associés aux cations ammoniums quaternaires présents dans l'espèce organique structurante pour la synthèse dudit solide cristallisé IZM-2 sont avantageusement choisis parmi l'anion acétate, l'anion sulfate, l'anion carboxylate, l'anion tétrafluoroborate, les anions halogénures tels que le fluorure, le chlorure, le bromure, l'iodure, l'anion hydroxyde et une combinaison de plusieurs d'entre eux. De manière préférée, les anions associés aux cations ammoniums quaternaires présents dans l'espèce structurante pour la synthèse du solide cristallisé IZM-2 sont choisis parmi l'anion hydroxyde et l'anion bromure. Ladite espèce organique azotée utilisée comme agent structurant dudit solide cristallisé IZM-2 est avantageusement synthétisée par toute méthode connue de l'Homme du métier. Pour la synthèse du dibromure de 1,6-bis(méthylpiperidinium)hexane, on procède avantageusement au mélange d'une mole de 1,6-dibromohexane et d'au moins 2 moles de N-méthylpiperidine dans l'éthanol. Généralement, le mélange est porté à reflux pendant une durée comprise entre 3 et 10 heures. Après filtration, précipitation au moyen d'un solvant éthéré tel que le diéthyéther puis recristallisation dans un mélange éthanol/éther, on obtient du dibromure de 1,6-bis(méthylpiperidinium)hexane. Le dihydroxyde de 1,6-bis(méthylpiperidinium)hexane est préférentiellement obtenu par traitement à température ambiante d'une solution aqueuse de dibromure de 1,6-bis(méthylpiperidinium)hexane par de l'oxyde d'argent $Ag_2O$.

La source de l'élément X, employée pour la mise en oeuvre du procédé de préparation dudit solide cristallisé IZM-2, peut avantageusement être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale, de la silice dissoute ou du tétraéthoxysilane (TEOS). Parmi les silices en poudre, on peut avantageusement utiliser les silices précipitées, notamment celles obtenues par précipitation à partir d'une solution de silicate de métal alcalin, telle que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm telles que celles commercialisées sous les marques déposées telle que "LUDOX". De manière préférée, la source de silicium est le LUDOX AS-40.

La source de l'élément Y, éventuellement employée pour la mise en oeuvre du procédé de préparation dudit solide cristallisé IZM-2, peut avantageusement être tout composé comprenant l'élément Y et pouvant libérer cet élément en solution aqueuse sous forme réactive. Dans le cas préféré où Y est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Pour la source de métal M alcalin et/ou alcalino-terreux de valence n, on utilise avantageusement un halogénure ou un hydroxyde dudit métal M, de préférence un hydroxyde dudit métal M.

Pour la mise en oeuvre du procédé de préparation dudit solide IZM-2, il est préféré que le mélange aqueux, comportant au moins une source d'au moins un oxyde $XO_2$, éventuellement au moins une source d'au moins un oxyde $Y_2O_3$, éventuellement au moins une source d'au moins un métal alcalin et/ou alcalino-terreux de valence n, au moins une espèce organique R ayant deux atomes d'azote quaternaires, comporte également au moins une source d'ions hydroxydes. Ladite source d'ions hydroxydes provient avantageusement de l'espèce organique structurante R lorsqu'elle se trouve sous sa forme hydroxyde, à savoir le dihydroxyde de 1,6-bis(méthylpiperidinium)hexane, ou encore de la source de métal M alcalin et/ou alcalino-terreux lorsqu'il se trouve sous forme hydroxyde, par exemple l'hydroxyde de sodium.

Aussi, selon un mode de réalisation préféré du procédé de préparation dudit solide cristallisé IZM-2, on fait réagir un mélange aqueux comportant un oxyde de silicium, éventuellement de l'alumine, du dibromure de 1,6-bis(méthylpiperidinium)hexane et de l'hydroxyde de sodium. Selon un autre mode de réalisation préféré du procédé selon l'invention, on fait réagir un mélange aqueux comportant un oxyde de silicium, éventuellement de l'alumine et du dihydroxyde de 1,6-bis(méthylpiperidinium)hexane.

Le procédé de préparation dudit solide cristallisé IZM-2 consiste avantageusement à préparer un mélange

réactionnel aqueux appelé gel et renfermant au moins une source d'au moins un oxyde $XO_2$, éventuellement au moins une source d'au moins un oxyde $Y_2O_3$, au moins une espèce organique R, éventuellement au moins une source d'au moins un métal alcalin et/ou alcalino-terreux de valence n. Les quantités desdits réactifs sont avantageusement ajustées de manière à conférer à ce gel une composition permettant sa cristallisation en solide cristallisé IZM-2 sous sa forme brute de synthèse de formule générale (I) $XO_2 : aY_2O_3 : bM_{z/n}O : cR : dH_2O$, où a, b, c et d répondent aux critères définis plus haut lorsque c et d sont supérieurs à 0. Puis le gel est soumis à un traitement hydrothermal jusqu'à ce que ledit solide cristallisé IZM-2 se forme. Le gel est mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore plus préférée entre 160 et 175°C jusqu'à la formation des cristaux de solide IZM-2 sous sa forme brute de synthèse. La durée nécessaire pour obtenir la cristallisation varie généralement entre 1 heure et plusieurs mois en fonction de la composition des réactifs dans le gel, de l'agitation et de la température de réaction. De préférence la durée de cristallisation varie entre 2 heures et 21 jours. La mise en réaction s'effectue généralement sous agitation ou en absence d'agitation, de préférence en présence d'agitation.

Il peut être avantageux d'additionner des germes au mélange réactionnel afin de réduire le temps nécessaire à la formation des cristaux et/ou la durée totale de cristallisation. Il peut également être avantageux d'utiliser des germes afin de favoriser la formation dudit solide cristallisé IZM-2 au détriment d'impuretés. De tels germes comprennent avantageusement des solides cristallisés, notamment des cristaux de solide IZM-2. Les germes cristallins sont généralement ajoutés dans une proportion comprise entre 0,01 et 10% de la masse de l'oxyde $XO_2$ utilisée dans le mélange réactionnel.

A l'issue de l'étape de traitement hydrothermal conduisant à la cristallisation dudit solide IZM-2, la phase solide est avantageusement filtrée, lavée, séchée puis calcinée. L'étape de calcination s'effectue par une ou plusieurs étapes de chauffage réalisée à une température comprise entre 100 et 1000°C, de préférence comprise entre 400 et 650°C, pour une durée comprise entre quelques heures et plusieurs jours, de préférence comprise entre 3 heures et 48 heures. De manière préférée, la calcination s'effectue en deux étapes de chauffage consécutives.

A l'issue de ladite étape de calcination, ledit solide IZM-2 obtenu est avantageusement celui présentant le diagramme de diffraction de rayons X incluant au moins les raies inscrites dans le tableau 1. Il est dépourvu d'eau ainsi que de l'espèce organique R présentes dans le solide IZM-2 sous sa forme brute de synthèse.

Après calcination, le solide IZM-2 entrant dans la composition du support du catalyseur selon l'invention est avantageusement échangé par au moins un traitement par une solution d'au moins un sel d'ammonium de manière à obtenir la forme ammonium du solide IZM-2 qui une fois calcinée conduit à la forme acide ($H^+$) dudit solide IZM-2. Cette étape d'échange peut être effectuée à toute étape de la préparation du catalyseur, c'est-à-dire après l'étape de préparation du solide IZM-2, après l'étape de mise en forme du solide IZM-2 (par pastillage ou par un liant minéral poreux), ou encore après l'étape d'introduction du métal hydro-déshydrogénant. De préférence l'étape d'échange est effectuée après l'étape de mise en forme du solide IZM-2.

Ledit solide IZM-2 entrant dans la composition du support du catalyseur utilisé dans le procédé selon l'invention est avantageusement au moins en partie, de préférence pratiquement totalement, sous forme acide, c'est-à-dire sous forme acide ($H^+$). Le rapport atomique M/Y est généralement avantageusement inférieur à 0,1 et de préférence inférieur à 0,05 et de manière encore plus préférée inférieur à 0,01.

**c) Le liant minéral**

Le catalyseur utilisé dans le procédé selon l'invention peut avantageusement contenir un liant minéral poreux amorphe ou mal cristallisé de type oxyde, le liant préféré étant de type alumine. Les composés d'alumine avantageusement utilisés selon l'invention sont partiellement solubles en milieu acide. Ils sont avantageusement choisis tout ou en partie dans le groupe des composés d'alumine de formule générale $Al_2O_3$, $nH_2O$. On peut en particulier utiliser des composés hydratés d'alumine tels que : l'hydrargillite, la gibbsite, la bayerite, la boehmite, la pseudo-boehmite et les gels d'alumine amorphe ou essentiellement amorphe. On peut avantageusement également mettre en oeuvre les formes déshydratées de ces composés qui sont constitués d'alumines de transition et qui comportent au moins une des phases prises dans le groupe : rhô, khi, êta, gamma, kappa, thêta, et delta, qui se différencient essentiellement par l'organisation de leur structure cristalline. L'alumine alpha appelée communément corindon peut avantageusement être incorporée dans une faible proportion dans le support selon l'invention.

L'hydrate d'aluminium $Al_2O_3$, $nH_2O$ utilisé de manière plus préférentielle est avantageusement la boehmite, la pseudo-boehmite et les gels d'alumine amorphe ou essentiellement amorphe. Un mélange de ces produits sous quelque combinaison que ce soit peut être également utilisé.

La boehmite est généralement décrite comme un monohydrate d'aluminium de formule $Al_2O_3$, $nH_2O$ qui englobe en réalité un large continuum de matériaux de degré d'hydratation et d'organisation variables avec des frontières plus ou moins bien définies : la boehmite gélatineuse la plus hydratée, avec n pouvant être supérieur à 2, la pseudo-boehmite ou la boehmite micro-cristalline avec n compris entre 1 et 2, puis la boehmite cristalline et enfin la boehmite bien cristallisée en gros cristaux avec n voisin de 1. La morphologie du monohydrate d'aluminium peut avantageusement

varier dans de larges limites entre ces deux formes extrêmes aciculaire ou prismatique. Tout un ensemble de formes variables peut être utilisé entre ces deux formes : chaîne, bateaux, plaquettes entrelacées.

Des hydrates d'aluminium relativement purs peuvent avantageusement être utilisés sous forme de poudre, amorphes ou cristallisés ou cristallisés contenant une partie amorphe. L'hydrate d'aluminium peut également avantageusement être introduit sous forme de suspensions ou dispersions aqueuses. Les suspensions ou dispersions aqueuses d'hydrate d'aluminium mises en oeuvre dans l'invention peuvent avantageusement être gélifiables ou coagulables. Les dispersions ou suspensions aqueuses peuvent également avantageusement être obtenues ainsi qu'il est bien connu de l'homme du métier par peptisation dans l'eau ou l'eau acidulée d'hydrates d'aluminium.

La dispersion d'hydrate d'aluminium peut avantageusement être réalisée par tout procédé connu de l'homme du métier : dans un réacteur en "batch", un mélangeur en continu, un malaxeur, un broyeur colloïdal. Un tel mélange peut avantageusement être également réalisé dans un réacteur à écoulement piston et, notamment dans un mélangeur statique. On peut citer les réacteurs Lightnin.

En outre, on peut également avantageusement mettre en oeuvre comme source d'alumine une alumine ayant été soumise au préalable à un traitement susceptible d'améliorer son degré de dispersion. A titre d'exemple, on pourra améliorer la dispersion de la source d'alumine par un traitement d'homogénéisation préliminaire. Par homogénéisation, on peut avantageusement utiliser au moins un des traitements d'homogénéisation décrit dans le texte qui suit.

Les dispersions ou suspensions aqueuses d'alumine que l'on peut mettre en oeuvre sont notamment les suspensions ou dispersions aqueuses de boehmites fines ou ultra-fines qui sont composés de particules ayant avantageusement des dimensions dans le domaine colloïdal.

Les boehmites fines ou ultra-fines avantageusement mises en oeuvre selon la présente invention peuvent notamment avoir été obtenues selon le brevet français FR-B-1 261 182 et FR-B-1 381 282 ou dans la demande de brevet européen EP-A-15 196.

On peut avantageusement mettre en oeuvre également les suspensions ou dispersions aqueuses obtenues à partir de pseudo-boehmite, de gels d'alumine amorphe, de gels d'hydroxyde d'aluminium ou d'hydrargillite ultra-fine.

Le monohydrate d'aluminium peut avantageusement être acheté parmi une variété de sources commerciales d'alumine telle que notamment les PURAL®, CATAPAL®, DISPERAL®, DISPAL® commercialisée par la société SASOL ou encore HIQ® commercialisée par ALCOA, ou selon les méthodes connues de l'homme du métier: elle peut avantageusement être préparée par déshydratation partielle de trihydrate d'aluminium par des méthodes conventionnelles ou elle peut avantageusement être préparée par précipitation. Lorsque ces alumines se présentent sous forme d'un gel, elles sont avantageusement peptisées par l'eau ou une solution acidulée. Dans la précipitation, la source acide peut avantageusement être par exemple choisie parmi au moins un des composés suivants : le chlorure d'aluminium, le sulfate d'aluminium, le nitrate d'aluminium. La source basique d'aluminium peut être choisie parmi les sels basiques d'aluminium tels que l'aluminate de sodium et l'aluminate de potassium.

**d) Préparation du support IZM-2 / liant**

Le support du catalyseur utilisé dans le procédé selon l'invention peut avantageusement être préparé selon toutes les méthodes bien connues de l'homme du métier à partir des supports préparés comme décrit plus haut. Ledit solide cristallisé IZM-2 peut avantageusement être introduit selon toute méthode connue de l'homme du métier et ce à tout stade de la préparation du support ou du catalyseur.

Selon un mode de préparation préféré, ledit solide cristallisé IZM-2 peut avantageusement être introduit au cours de la mise en solution ou en suspension des composés d'alumine avantageusement utilisés selon l'invention. Ledit solide cristallisé IZM-2 peut être, sans que cela soit limitatif, par exemple sous forme de poudre, poudre broyée, suspension, suspension ayant subi un traitement de désagglomération. Ainsi, par exemple, ledit solide cristallisé peut avantageusement être mise en suspension acidulée ou non à une concentration ajustée à la teneur finale en solide IZM-2 visée sur le support. Cette suspension appelée couramment une barbotine est alors mélangée avec les composés d'alumine.

Mise en forme

Le support du catalyseur utilisé dans le procédé selon l'invention peut avantageusement être mise en forme par toute technique connue de l'homme du métier. La mise en forme peut avantageusement être réalisée par exemple par extrusion, par pastillage, par la méthode de la coagulation en goutte ("oil-drop"), par granulation au plateau tournant ou par toute autre méthode bien connue de l'homme du métier.

La mise en forme peut avantageusement également être réalisée en présence des différents constituants du catalyseur et extrusion de la pâte minérale obtenue, par pastillage, mise en forme sous forme de billes au drageoir tournant ou au tambour, coagulation en goutte, "oil-drop", "oil-up", ou tout autre procédé connu d'agglomération d'une poudre contenant de l'alumine et éventuellement d'autres ingrédients choisis parmi ceux mentionnés plus haut.

Les catalyseurs mis en oeuvre dans le procédé selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est avantageusement utilisée de manière préférée, mais toute autre forme peut avantageusement être utilisée.

Par ailleurs, ces supports mis en oeuvre dans le procédé selon la présente invention peuvent avantageusement avoir été traités ainsi qu'il est bien connu de l'homme du métier par des additifs pour faciliter la mise en forme et/ou améliorer les propriétés mécaniques finales des supports. A titre d'exemple d'additifs, on peut citer notamment la cellulose, la carboxyméthyl-cellulose, la carboxy-ethyl-cellulose, du tall-oil, les gommes xanthaniques, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylènes glycols, etc.

On peut avantageusement ajouter ou retirer de l'eau pour ajuster la viscosité de la pâte à extruder. Cette étape peut avantageusement être réalisée à tout stade de l'étape de malaxage.

Pour ajuster la teneur en matière solide de la pâte à extruder afin de la rendre extrudable, on peut avantageusement également ajouter un composé majoritairement solide et de préférence un oxyde ou un hydrate. On utilise de manière préférée un hydrate et de manière encore plus préférée un hydrate d'aluminium. La perte au feu de cet hydrate est avantageusement supérieure à 15%.

L'extrusion peut avantageusement être réalisée par n'importe quel outil conventionnel, disponible commercialement. La pâte issue du malaxage est avantageusement extrudée à travers une filière, par exemple à l'aide d'un piston ou d'une mono-vis ou double vis d'extrusion. Cette étape d'extrusion peut avantageusement être réalisée par toute méthode connue de l'homme de métier.

Les extrudés de support selon l'invention ont avantageusement généralement une résistance à l'écrasement d'au moins 70 N/cm et de manière préférée supérieure ou égale à 100 N/cm.

<u>Traitement thermique du support IZM2 / liant</u>

Le séchage est avantageusement effectué par toute technique connue de l'homme du métier.

Pour obtenir le support de la présente invention, il est préférable de calciner de préférence en présence d'oxygène moléculaire, par exemple en effectuant un balayage d'air, à une température inférieure ou égale à 1100°C. Au moins une calcination peut avantageusement être effectuée après l'une quelconque des étapes de la préparation. Ce traitement par exemple peut être effectué en lit traversé, en lit léché ou en atmosphère statique. Par exemple, le four utilisé peut avantageusement être un four rotatif tournant ou être un four vertical à couches traversées radiales. Les conditions de calcination : température et durée dépendent principalement de la température maximale d'utilisation du catalyseur. Les conditions préférées de calcination se situent avantageusement entre plus d'une heure à 200°C à moins d'une heure à 1100°C. La calcination peut avantageusement être opérée en présence de vapeur d'eau. La calcination finale peut être éventuellement effectuée en présence d'une vapeur acide ou basique. Par exemple, la calcination peut avantageusement être réalisée sous pression partielle d'ammoniaque.

<u>Traitements post-synthèse du support IZM-2 / liant</u>

Des traitements post-synthèse peuvent avantageusement être effectués, de manière à améliorer les propriétés du catalyseur.

Le support IZM-2 / liant peut ainsi être éventuellement soumis à un traitement hydrothermal en atmosphère confinée. On entend par traitement hydrothermal en atmosphère confinée un traitement par passage à l'autoclave en présence d'eau à une température supérieure à la température ambiante.

Au cours de ce traitement hydrothermal, on peut avantageusement traiter le support. Ainsi, on peut avantageusement imprégner le support, préalablement à son passage à l'autoclave, l'autoclavage étant fait soit en phase vapeur, soit en phase liquide, cette phase vapeur ou liquide de l'autoclave pouvant être acide ou non. Cette imprégnation, préalable à l'autoclavage, peut avantageusement être acide ou non. Cette imprégnation, préalable à l'autoclavage peut avantageusement être effectuée à sec ou par immersion du support dans une solution aqueuse acide. Par imprégnation à sec, on entend mise en contact du support avec un volume de solution inférieur ou égal au volume poreux total du support. De préférence, l'imprégnation est réalisée à sec.

L'autoclave est de préférence un autoclave à panier rotatif tel que celui défini dans la demande brevet EP-A-0 387 109.

La température pendant l'autoclavage peut être comprise entre 100 et 250°C pendant une période de temps comprise entre 30 minutes et 3 heures.

**e) Dépôt de la fonction hydro-déshydrogénante**

La fonction hydro-déshydrogénante peut avantageusement être introduite à toute étape de la préparation, de manière très préférée après mise en forme du support IZM2 / liant. La mise en forme est avantageusement suivie d'une calcination, la fonction hydro-déshydrogénante peut également avantageusement être introduite avant ou après cette calcination. La préparation se termine généralement par une calcination à une température de 250 à 600°C. Une autre des méthodes préférées selon la présente invention consiste avantageusement à mettre en forme le support IZM2 / liant après un malaxage de ce dernier, puis passage de la pâte ainsi obtenue au travers d'une filière pour former des extrudés de diamètre compris entre 0,4 et 4 mm. La fonction hydro-déshydrogénante peut avantageusement être alors introduite en partie seulement ou en totalité, au moment du malaxage. Elle peut également avantageusement être introduite par une ou plusieurs opérations d'échange ionique sur le support calciné.

D'une façon préférée, le support est imprégné par une solution aqueuse. L'imprégnation du support est de préférence effectuée par la méthode d'imprégnation dite "à sec" bien connue de l'homme du métier. L'imprégnation peut avantageusement être effectuée en une seule étape par une solution contenant l'ensemble des éléments constitutifs du catalyseur final.

La fonction hydro-déshydrogénante peut avantageusement être introduite par une ou plusieurs opérations d'imprégnation du support mis en forme et calciné, par une solution contenant au moins un précurseur d'au moins un oxyde d'au moins un métal choisi dans le groupe formé par les métaux du groupes VIII et les métaux du groupe VIB, le(s) précurseur(s) d'au moins un oxyde d'au moins un métal du groupe VIII étant de préférence introduit(s) après ceux du groupe VIB ou en même temps que ces derniers, si le catalyseur contient au moins un métal du groupe VIB et au moins un métal du groupe VIII.

Dans le cas où le catalyseur contient avantageusement au moins un élément du groupe VIB par exemple le molybdène, il est par exemple possible d'imprégner le catalyseur avec une solution contenant au moins un élément du groupe VIB, de sécher, de calciner. L'imprégnation du molybdène peut avantageusement être facilitée par ajout d'acide phosphorique dans les solutions de paramolybdate d'ammonium, ce qui permet d'introduire aussi le phosphore de façon à promouvoir l'activité catalytique.

Les éléments suivants : bore et/ou silicium et/ou phosphore peuvent être introduits dans le catalyseur à tout niveau de la préparation et selon toute technique connue de l'homme du métier.

Une méthode préférée selon l'invention consiste à déposer le ou les éléments promoteurs choisis, par exemple le couple bore-silicium, sur le support IZM-2 mis en forme avec le liant calciné ou non, de préférence calciné. Pour cela on prépare une solution aqueuse d'au moins un sel de bore tel que le biborate d'ammonium ou le pentaborate d'ammonium en milieu alcalin et en présence d'eau oxygénée et on procède à une imprégnation dite à sec, dans laquelle on remplit le volume des pores du précurseur par la solution contenant par exemple le bore. Dans le cas où l'on dépose par exemple également du silicium, on utilise par exemple une solution d'un composé du silicium de type silicone ou émulsion d'huile silicone.

Le ou les élément(s) promoteur(s) choisi(s) dans le groupe formé par le silicium, le bore et le phosphore peuvent avantageusement être introduits par une ou plusieurs opérations d'imprégnation avec excès de solution sur le précurseur calciné.

La source de bore peut avantageusement être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

La source de phosphore préférée est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

De nombreuses sources de silicium peuvent avantageusement être employées. Ainsi, on peut utiliser l'orthosilicate d'éthyle $Si(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut avantageusement être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les métaux nobles du groupe VIII du catalyseur de la présente invention peuvent avantageusement être présents en totalité ou partiellement sous forme métallique et/ou oxyde.

Les sources d'éléments nobles du groupe VIII qui peuvent avantageusement être utilisées sont bien connues de l'homme du métier. Pour les métaux nobles on utilise les halogénures, par exemple les chlorures, les nitrates, les acides tels que l'acide chloroplatinique, les hydroxydes, les oxychlorures tels que l'oxychlorure ammoniacal de ruthénium. On peut également avantageusement utiliser les complexes cationiques tels que les sels d'ammonium lorsque l'on souhaite déposer le platine sur le solide IZM-2 par échange cationique.

**Les modes de réalisation selon l'invention**

Conformément à la présente invention, le procédé de production de distillats moyens à partir d'une charge paraffinique produite par synthèse Fischer-Tropsch, met en oeuvre un catalyseur d'hydrocraquage/hydroisomérisation comprenant au moins un métal hydro-déshydrogénant choisi dans le groupe formé par les métaux du groupe VIB et du groupe VIII de la classification périodique et un support comprenant au moins un solide cristallisé IZM-2.

Ledit procédé opère avantageusement à une température comprise entre 270 et 400°C et de préférence entre 300 et 390 °C, à une pression comprise entre 1 et 9 MPa et de préférence comprise entre 2 et 8 MPa, à une vitesse spatiale comprise entre 0,5 et 5 $h^{-1}$ et de préférence comprise entre 0,8 et 3 $h^{-1}$, et à un débit d'hydrogène ajusté pour obtenir un rapport de 400 à 1500 Normaux litres d'hydrogène par litre de charge et de préférence un rapport de 600 et 1300 Normaux litres d'hydrogène par litre de charge.

**a) Premier mode de réalisation**

Selon un mode de réalisation préféré de l'invention, le procédé comprend les étapes suivantes à partir d'une charge issue de la synthèse Fischer Tropsch :

a) séparation d'une seule fraction dite lourde à point d'ébullition initial compris entre 120-200°C,
b) hydrotraitement d'une partie au moins de ladite fraction lourde,
c) fractionnement en au moins 3 fractions :

- au moins une fraction intermédiaire ayant un point d'ébullition initial T1 compris entre 120 et 200°C, et un point d'ébullition final T2 supérieur à 300°C et inférieur à 410°C,
- au moins une fraction légère bouillant au-dessous de la fraction intermédiaire,
- au moins une fraction lourde bouillant au-dessus de la fraction intermédiaire.

d) passage d'une partie au moins de ladite fraction intermédiaire sur un catalyseur hydroisomérisant,
e) passage d'une partie au moins de ladite fraction lourde dans le procédé selon l'invention,
f) distillation des fractions hydrocraquées / hydroisomérisées pour obtenir des distillats moyens, et recyclage de la fraction résiduelle bouillant au-dessus desdits distillats moyens dans l'étape (e) sur le catalyseur selon l'invention traitant la fraction lourde.

La description de ce mode de réalisation sera faite en se référant à la figure 1 sans que la figure 1 limite l'interprétation.

Étape (a)

L'effluent issu de l'unité de synthèse Fischer-Tropsch arrivant par la conduite 1 est fractionné (par exemple par distillation) dans un moyen de séparation (2) en au moins deux fractions : au moins une fraction légère et une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C. La fraction légère de la figure 1 sort par la conduite (3) et la fraction lourde par la conduite (4).

Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les deux fractions décrites ci-dessus.

La fraction légère n'est pas traitée selon le procédé de l'invention mais peut par exemple constituer une bonne charge pour la pétrochimie et plus particulièrement pour une unité (5) de vapocraquage. La fraction lourde précédemment décrite est traitée selon le procédé de l'invention.

Etape (b)

Au moins une partie de la dite fraction lourde (étape a) est admise en présence d'hydrogène (conduite 6) dans

une zone (7) contenant un catalyseur d'hydrotraitement qui a pour objectif de réduire la teneur en composés oléfiniques et insaturés ainsi que d'éventuellement décomposer les composés oxygénés présents dans la fraction, ainsi que d'éventuellement décomposer d'éventuelles traces de composés soufrés et azotés présentes dans la fraction lourde. Cette étape d'hydrotraitement est non convertissante, c'est à dire que la conversion de la fraction 370°C$^+$ en fraction 370°C$^-$ est de préférence inférieure à 20% en poids, de manière préférée inférieure à 10% en poids et de manière très préférée inférieure à 5% en poids.

Les catalyseurs utilisés dans cette étape (b) sont des catalyseurs d'hydrotraitement non craquants ou peu craquants comportant au moins un métal du groupe VIII et/ou du groupe VI de la classification périodique des éléments. De préférence le catalyseur comprend au moins un métal du groupe de métaux formé par le nickel, le molybdène, le tungstène, le cobalt, le ruthénium, l'indium, le palladium et le platine et comporte au moins un support.

On peut utiliser une combinaison d'au moins un métal du groupe VI (notamment le molybdène ou le tungstène) et d'au moins un métal du groupe VIII (notamment cobalt et le nickel) de la classification périodique des éléments. La concentration en métal du groupe VIII non noble, lorsque celui-ci est utilisé, est de 0,01 à 15% en poids d'équivalent par rapport au catalyseur fini et celle du métal du groupe VI (notamment le molybdène ou le tungstène) est de 5% à 30% en poids d'équivalent oxyde par rapport au catalyseur fini. Lorsqu'une combinaison de métaux du groupe VI et du groupe VIII est utilisée, le catalyseur est alors préférentiellement utilisé sous une forme sulfurée.

Avantageusement, au moins un élément choisi parmi P, B, Si est déposé sur le support.

Ce catalyseur pourra contenir avantageusement du phosphore; en effet, ce composé apporte deux avantages aux catalyseurs d'hydrotraitement : une facilité de préparation lors notamment de l'imprégnation des solutions de nickel et de molybdène, et une meilleure activité d'hydrogénation.

Dans un catalyseur préféré, la concentration totale en métaux des groupes VI et VIII, exprimée en oxydes de métaux, est comprise entre 5 et 40% en poids et de préférence entre 7 et 30% en poids et le rapport pondéral exprimé en oxyde de métal (ou de métaux) du groupe VI sur métal (ou métaux) du groupe VIII est compris entre 1,25 et 20 et de préférence entre 2 et 10. Avantageusement, s'il y a du phosphore, la concentration en oxyde de phosphore $P_2O_5$ sera inférieure à 15% en poids et de préférence inférieure à 10% en poids.

On peut utiliser également un catalyseur contenant du bore et du phosphore; avantageusement le bore et le phosphore sont des éléments promoteurs déposés sur le support, et par exemple le catalyseur selon le brevet EP297949. La somme des quantités de bore et de phosphore, exprimées respectivement en poids de trioxyde de bore et pentoxyde de phosphore, par rapport au poids de support, est d'environ 5 à 15% et le rapport atomique bore sur phosphore est d'environ 1:1 à 2:1 et au moins 40% du volume poreux total du catalyseur fini est contenu dans des pores de diamètre moyen supérieur à 13 nanomètres. De façon préférée, la quantité de métal du groupe VI tel que le molybdène ou le tungstène, est telle que le rapport atomique phosphore sur métal du groupe VIB est d'environ 0,5:1 à 1,5:1; les quantités de métal du groupe VIB et de métal du groupe VIII, tel que le nickel ou le cobalt, sont telles que le rapport atomique métal du groupe VIII sur métal du groupe VIB est d'environ 0,3:1 à 0,7:1. Les quantités de métal du groupe VIB exprimées en poids de métal par rapport au poids de catalyseur fini est d'environ 2 à 30% et la quantité de métal du groupe VIII exprimée en poids de métal par rapport au poids de catalyseur fini est d'environ 0,01 à 15%.

Un autre catalyseur particulièrement avantageux contient du silicium promoteur déposé sur le support. Un catalyseur intéressant contient BSi ou PSi.

Les catalyseurs sulfurés Ni sur alumine, NiMo sur alumine, NiMo sur alumine dopée avec du bore et du phosphore et NiMo sur silice-alumine sont également préférés. Avantageusement, on choisira de l'alumine éta ou gamma comme support.

Dans le cas de l'emploi de métaux nobles (platine et/ou palladium) de préférence, la teneur en métal est comprise entre 0,05 et 3% en poids par rapport au catalyseur fini et de préférence entre 0,1 et 2% poids du catalyseur fini. Le métal noble est de préférence utilisé sous sa forme réduite et non sulfurée. Il est également possible d'employer un catalyseur à base de nickel réduit et non sulfuré. Dans ce cas la teneur en métal sous sa forme oxyde est comprise entre 0,5 et 25% en poids par rapport au catalyseur fini. De manière préférée le catalyseur contient également un métal du groupe IB tel que le cuivre, dans des proportions telles que le rapport massique du métal du groupe IB et du nickel sur le catalyseur soit compris entre 1 et 1:30.

Ces métaux sont déposés sur un support qui est de préférence une alumine, mais qui peut aussi être de l'oxyde de Bore, de la magnésie, de la zircone, de l'oxyde de titane, une argile ou une combinaison de ces oxydes. Ces catalyseurs peuvent être préparés par toutes les méthodes connues de l'homme de l'art ou bien peuvent être acquis auprès de sociétés spécialisées dans la fabrication et la vente de catalyseurs.

Dans le réacteur d'hydrotraitement (7), la charge est mise en contact du catalyseur en présence d'hydrogène à des températures et des pressions opératoires permettant de réaliser l'hydrogénation des oléfines présentes dans la charge. De manière préférée, le catalyseur et les conditions opératoires choisies permettront également d'effectuer l'hydrodéoxygénation c'est à dire la décomposition des composés oxygénés (principalement des alcools) et/ou l'hydrodésulfuration ou l'hydrodéazotation des traces éventuelles de composés soufrés et/ou azotés présents dans la charge. Les températures réactionnelles utilisées dans le réacteur d'hydrotraitement sont comprises entre 100 et 400°C, de

préférence entre 150 et 350°C, de façon encore plus préférée entre 150 et 300°C. La gamme de pression totale utilisée varie de 5 à 150 bar, de préférence entre 10 et 100 bar et de manière encore plus préférée entre 10 et 90 bar. L'hydrogène qui alimente le réacteur d'hydrotraitement est introduit à un débit tel que le rapport volumique hydrogène/hydrocarbures soit compris entre 50 à 3000 normaux litres par litre, de préférence entre 100 et 2000 normaux litres par litre et de façon encore plus préférée entre 150 et 1500 normaux litres par litre. Le débit de charge est tel que la vitesse volumique horaire est comprises entre 0,1 et 10 $h^{-1}$, de préférence entre 0,2 et 5 $h^{-1}$ et de manière encore plus préférée entre 0,2 et 3 $h^{-1}$. Dans ces conditions, la teneur en molécules insaturées et oxygénées est réduite à moins de 0,5% en poids et à environ moins de 0,1% en poids en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 20% en poids, de préférence est inférieure à 10% en poids et de façon encore plus préférée est inférieure à 5% en poids.

Étape (c)

L'effluent issu du réacteur d'hydrotraitement est amené par une conduite (8) dans une zone de fractionnement (9) où il est fractionné en au moins trois fractions :

- au moins une fraction légère (sortant par la conduite 10) dont les composés constituants ont des points d'ébullition inférieurs à une température T1 comprise entre 120 et 200°C, et de préférence entre 130 et 180°C et de manière encore plus préférée à une température d'environ 150°C. En d'autres termes le point de coupe est situé entre 120 et 200°C.
- au moins une fraction intermédiaire (conduite 11) comportant les composés dont les points d'ébullition sont compris entre le point de coupe T1, précédemment défini, et une température T2 supérieure à 300°C, de manière encore plus préférée supérieure à 350°C et inférieure à 410°C ou mieux à 370°C.
- au moins une fraction dite lourde (conduite 12) comportant les composés ayant des points d'ébullition supérieurs au point de coupe T2 précédemment défini.

Étape (d)

Une partie au moins de ladite fraction intermédiaire est alors introduite (conduite 11), ainsi qu'éventuellement un flux d'hydrogène, (conduite 13) dans la zone (14) contenant un catalyseur d'hydroisomérisation.

Les conditions opératoires dans lesquelles est effectuée cette étape (d) sont les suivantes.La pression est maintenue entre 2 et 150 bar et de préférence entre 5 et 100 bar et avantageusement de 10 à 90 bar, la vitesse spatiale est comprise entre 0,1 $h^{-1}$ et 10 $h^{-1}$ et de préférence entre 0,2 et 7 $h^{-1}$ est avantageusement entre 0,5 et 5,0 $h^{-1}$. Le débit d'hydrogène est ajusté pour obtenir un rapport de 100 à 2000 Normaux litres d'hydrogène par litre de charge et préférentiellement entre 150 et 1500 litres d'hydrogène par litre de charge. La température utilisée dans cette étape est comprise entre 200 et 450°C et préférentiellement de 250°C à 450°C avantageusement de 300 à 450°C, et encore plus avantageusement supérieure à 320°C ou par exemple entre 320 et 420°C.

L'étape (d) d'hydroisomérisation est avantageusement conduite dans des conditions telles que la conversion par passe en produits à points d'ébullition supérieurs ou égaux à 150°C en des produits ayant des points d'ébullition inférieurs à 150°C est la plus faible possible, de préférence inférieure à 50%, de manière encore plus préférée inférieure à 30%, et de manière très préférée inférieure à 15% en poids, et permet d'obtenir des distillats moyens (gazole et kérosène) ayant des propriétés à froid (point d'écoulement et de congélation) suffisamment bonnes pour satisfaire aux spécifications en vigueur pour ce type de carburant.

Ainsi dans cette étape (d), on cherche à favoriser l'hydroisomérisation plutôt que l'hydrocraquage. Les catalyseurs utilisés sont de type bifonctionnels, c'est-à-dire qu'ils possèdent une fonction hydro/déshydrogénante et une fonction hydroisomérisante. La fonction hydro/déshydrogénante est généralement fournie soit par des métaux nobles (Pt et/ou Pd) actifs sous leur forme réduite soit par des métaux non nobles du groupe VI (particulièrement le molybdène et le tungstène) en combinaison avec des métaux non nobles du groupe VIII (particulièrement le nickel et le cobalt), utilisés de préférence sous leur forme sulfurée. La fonction hydroisomérisante est assurée par des solides acides, de type zéolithes, alumines halogénées, agiles à pilier, hétéropolyacides ou zircone sulfatée. Un liant de type alumine peut également être utilisé durant l'étape de mise en forme du catalyseur. La fonction métallique peut être introduite sur le catalyseur par toute méthode connue de l'homme du métier, comme par exemple le comalaxage, l'imprégnation à sec, l'imprégnation par échange.

Dans le cas où le catalyseur d'hydroisomérisation comprend au moins un métal noble du groupe VIII, la teneur en métal noble est avantageusement comprise entre 0,01 et 5% en poids par rapport au catalyseur fini, de manière préférée entre 0,1 et 4% en poids et de manière très préférée entre 0,2 et 2% en poids. Avant utilisation dans la réaction, le métal noble contenu dans le catalyseur doit être réduit. Une des méthodes préférées pour conduire la réduction du

métal est le traitement sous hydrogène à une température comprise entre 150°C et 650°C et une pression totale comprise entre 1 et 250 bar. Par exemple, une réduction consiste en un palier à 150°C de deux heures puis une montée en température jusqu'à 450°C à la vitesse de 1°C/min puis un palier de deux heures à 450°C; durant toute cette étape de réduction, le débit d'hydrogène est de 1000 normaux litres hydrogène / litre catalyseur et la pression totale maintenue constante à 1 bar. Notons également que toute méthode de réduction ex-situ est convenable.

Dans le cas où le catalyseur d'hydroisomérisation comprend au moins un métal du groupe VI en combinaison avec au moins un métal non noble du groupe VIII, la teneur en métal du groupe VI du catalyseur d'hydroisomérisation, est avantageusement comprise, en équivalent oxyde, entre 5 et 40% en poids par rapport au catalyseur fini, de manière préférée entre 10 et 35% en poids et de manière très préférée entre 15 et 30% en poids et la teneur en métal du groupe VIII dudit catalyseur est avantageusement comprise, en équivalent oxyde, entre 0,5 et 10% en poids par rapport au catalyseur fini, de manière préférée entre 1 et 8% en poids et de manière très préférée entre 1,5 et 6% en poids. Avant utilisation dans la réaction, les métaux du groupe VI et non nobles du groupe VIII doivent être sulfurés. Toute méthode de sulfuration in-situ ou ex-situ connue de l'homme de l'art est convenable.

La fonction hydro/déshydrogénante métallique peut avantageusement être introduite sur ledit catalyseur par toute méthode connue de l'homme du métier, comme par exemple le comalaxage, l'imprégnation à sec, l'imprégnation par échange.

Conformément à l'étape (d) d'hydroisomérisation du procédé selon l'invention, le catalyseur d'hydroisomérisation comprend au moins un tamis moléculaire, de préférence au moins un tamis moléculaire zéolithique et de manière plus préférée, au moins un tamis moléculaire zéolithique 10 MR monodimensionnel en tant que fonction hydroisomérisante.

Les tamis moléculaires zéolithiques sont définis dans la classification "Atlas of Zeolite Structure Types", W. M Meier, D. H. Olson and Ch. Baerlocher, 5th revised edition, 2001, Elsevier auquel se réfère également la présente demande. Les zéolithes y sont classées selon la taille de leurs ouvertures de pores ou canaux.

Les tamis moléculaires zéolithiques 10 MR monodimensionnel présentent des pores ou canaux dont l'ouverture est définie par un anneau à 10 atomes d'oxygène (ouverture à 10 MR). Les canaux du tamis moléculaire zéolithique ayant une ouverture à 10 MR sont avantageusement des canaux monodimensionnels non interconnectés qui débouchent directement sur l'extérieur de ladite zéolithe. Les tamis moléculaires zéolithiques 10 MR monodimensionnels présents dans ledit catalyseur d'hydroisomérisation comprennent avantageusement du silicium et au moins un élément T choisi dans le groupe formé par l'aluminium, le fer, le gallium, le phosphore et le bore, de préférence l'aluminium. Les rapports Si/Al des zéolithes décrites ci-dessus sont avantageusement ceux obtenus à la synthèse ou bien obtenus après des traitements de désalumination post-synthèse bien connus de l'homme de l'art, tels que et à titre non exhaustif les traitements hydrothermiques suivis ou non d'attaques acides ou bien encore les attaques acides directes par des solutions d'acides minéraux ou organiques. Elles sont, de préférence, pratiquement totalement, sous forme acide, c'est-à-dire que le rapport atomique entre le cation de compensation monovalent (par exemple le sodium) et l'élément T inséré dans le réseau cristallin du solide est avantageusement inférieur à 0,1, de préférence inférieur à 0,05 et de manière très préférée inférieur à 0,01. Ainsi, les zéolithes entrant dans la composition dudit catalyseur sélectif d'hydroisomérisation sont avantageusement calcinées et échangées par au moins un traitement par une solution d'au moins un sel d'ammonium de manière à obtenir la forme ammonium des zéolithes qui une fois calcinée conduisent à la forme acide desdites zéolithes.

Ledit tamis moléculaire zéolithique 10 MR monodimensionnel dudit catalyseur d'hydroisomérisation est avantageusement choisi parmi les tamis moléculaires zéolithiques de type structural TON (choisis parmi la ZSM-22 et la NU-10, pris seul ou en mélange), FER (choisis parmi la ZSM-35 et la ferrierite, pris seul ou en mélange), EUO (choisis parmi la EU-1 et la ZSM-50, pris seul ou en mélange), la SAPO-11 ou les tamis moléculaires zéolithique ZBM-30 ou ZSM 48, pris seul ou en mélange. De préférence, ledit tamis moléculaire zéolithique 10 MR monodimensionnel est choisi parmi les tamis moléculaires zéolithiques ZBM-30, NU-10 et ZSM-22, pris seul ou en mélange. De manière très préférée, ledit tamis moléculaire zéolithique 10 MR monodimensionnel est la ZBM-30 synthétisée avec le structurant organique triéthylènetétramine. En effet, l'utilisation de ladite ZBM-30 produit de bien meilleurs résultats en terme de rendement et d'activité que les autres zéolithes et notamment que la ZSM 48.

La teneur en tamis moléculaire zéolithique 10 MR monodimensionnel est avantageusement comprise entre 5 et 95% en poids, de préférence entre 10 et 90% en poids, de manière plus préférée entre 15 et 85% en poids et de manière très préférée entre 20 et 80% en poids par rapport au catalyseur fini. Les catalyseurs obtenus sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudres concassées, de tablettes, d'anneaux, de billes, de roues. La mise en forme peut être réalisée avec d'autres matrices que l'alumine, telles que par exemple la magnésie, les silice-alumines amorphes, les argiles naturelles (kaolin, bentonite, sepiolite, attapulgite), la silice, l'oxyde de titane, l'oxyde de bore, la zircone, les phosphates d'aluminium, les phosphates de titane, les phosphates de zirconium, le charbon et leurs mélanges. On préfère utiliser des matrices contenant de l'alumine, sous toutes ses formes connues de l'homme du métier,

et de manière encore plus préférée les alumines, par exemple l'alumine gamma. D'autres techniques que l'extrusion, telles que le pastillage ou la dragéification, peuvent être utilisées.

Étape (e)

Une partie au moins de ladite fraction lourde est introduite via la ligne (12) dans une zone (15) où elle est mise, en présence d'hydrogène (25), au contact d'un catalyseur mis en oeuvre dans le procédé selon la présente invention et dans les conditions opératoires du procédé de la présente invention afin de produire une coupe distillats moyens (kérosène + gazole) présentant de bonnes propriétés à froid.

Le catalyseur utilisé dans la zone (15) de l'étape (e) pour réaliser les réactions d'hydrocraquage et d'hydroisomérisation de la fraction lourde est le catalyseur défini dans la première partie de la demande de brevet. Il est à noter que les catalyseurs mis en oeuvre dans les réacteurs (14) et (15) peuvent être strictement identiques ou différents (par exemple, en faisant varier la proportion et la nature du solide acide dans le catalyseur, la nature du liant ou bien la quantité et nature de la phase hydrogénante).

Durant cette étape (e) la fraction entrant dans le réacteur subit au contact du catalyseur et en présence d'hydrogène essentiellement des réactions d'hydrocraquage qui, accompagnées de réactions d'hydroisomérisation des n-paraffines, vont permettre d'améliorer la qualité des produits formés et plus particulièrement les propriétés à froid du kérosène et du gazole, et également d'obtenir de très bons rendements en distillats moyens. La conversion en produits ayant des points d'ébullition supérieurs ou égal à 370°C en produits à points d'ébullition inférieurs à 370°C est supérieure à 50% poids, souvent d'au moins 60% et de préférence supérieure ou égal à 70%.

Étape (f)

Les effluents en sortie des réacteurs (14) et (15) sont envoyés par les conduites (16) et (17) dans un train de distillation, qui intègre une distillation atmosphérique et éventuellement une distillation sous vide, et qui a pour but de séparer d'une part les produits légers inévitablement formés lors des étapes (d) et (e) par exemple les gaz ($C_1$-$C_4$) (conduite 18) et une coupe essence (conduite 19), et de distiller au moins une coupe gazole (conduite 21) et kérosène (conduite 20). Les fractions gazole et kérosène peuvent être recyclées (conduite 23) en partie, conjointement ou de façon séparée, en tête du réacteur (14) d'hydroisomérisation de l'étape (d).

Il est également distillé une fraction (conduite 22) bouillant au-dessus du gazole, c'est à dire dont les composés qui la constituent ont des points d'ébullition supérieurs à ceux des distillats moyens (kérosène + gazole). Cette fraction, dite fraction résiduelle, présente généralement un point d'ébullition initial d'au moins 350°C, de préférence supérieure à 370°C. Cette fraction est avantageusement recyclée via la conduite (22) en tête du réacteur (15) d'hydroisomérisation et d'hydrocraquage de la fraction lourde (étape e).

Il peut être également avantageux de recycler une partie du kérosène et/ou du gazole dans l'étape (d), l'étape (e) ou les deux. De façon préférée, l'une au moins des fractions kérosène et/ou gazole est recyclée en partie dans l'étape (d) (zone 14). On a pu constater qu'il est avantageux de recycler une partie du kérosène pour améliorer ses propriétés à froid.

Avantageusement et dans le même temps, la fraction non hydrocraquée est recyclée en partie dans l'étape (e) (zone 15).

Il va sans dire que les coupes gazole et kérosène sont de préférence récupérées séparément, mais les points de coupe sont ajustés par l'exploitant en fonction de ses besoins.

Sur la figure 1, on a représenté une colonne (24) de distillation, mais deux colonnes peuvent être utilisées pour traiter séparément les coupes issues de zones (14) et (15).

Sur la figure 1, on a représenté seulement le recyclage du kérosène sur le catalyseur du réacteur (14). Il va sans dire qu'on peut aussi bien recycler une partie du gazole (séparément ou avec le kérosène) et de préférence sur le même catalyseur que le kérosène.

**b) Second mode de réalisation**

Un autre mode de réalisation de l'invention comprend les étapes suivantes :

a) séparation d'au moins une fraction légère de la charge de façon à obtenir une seule fraction dite lourde à point d'ébullition initial compris entre 120-200°C,
b) éventuel hydrotraitement de ladite fraction lourde, éventuellement suivi d'une étape
c) d'enlèvement d'au moins une partie de l'eau et éventuellement CO, $CO_2$, $NH_3$, $H_2S$,
d) passage dans le procédé selon l'invention d'une partie au moins de ladite fraction éventuellement hydrotraitée, la conversion sur le catalyseur selon l'invention ci-dessus décrit des produits à points d'ébullition supérieurs ou

égaux à 370°C en produits à points d'ébullition inférieures à 370°C est supérieure à 40% poids,

e) distillation de la fraction hydrocraquée/hydroisomérisée pour obtenir des distillats moyens, et recyclage dans l'étape d) de la fraction résiduelle bouillant au-dessus desdits distillats moyens.

La description de ce mode de réalisation sera faite en se référant à la figure 2 sans que la figure 2 ne limite l'interprétation.

Étape (a)

L'effluent issu de l'unité de synthèse Fischer-Tropsch arrivant par la conduite 1 est fractionné (par exemple par distillation) dans un moyen de séparation (2) en au moins deux fractions : au moins une fraction légère et une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C. La fraction légère de la figure 1 sort par la conduite (3) et la fraction lourde par la conduite (4).

Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les deux fractions décrites ci-dessus.

La fraction légère n'est pas traitée selon le procédé de l'invention mais peut par exemple constituer une bonne charge pour la pétrochimie et plus particulièrement pour une unité (5) de vapocraquage. La fraction lourde précédemment décrite est traitée selon le procédé de l'invention.

Etape (b)

Éventuellement, cette fraction est admise en présence d'hydrogène (conduite 6) dans une zone (7) contenant un catalyseur d'hydrotraitement qui a pour objectif de réduire la teneur en composés oléfiniques et insaturés ainsi que d'éventuellement décomposer les composés oxygénés (principalement des alcools) présents dans la fraction lourde décrite ci-dessus, ainsi que d'éventuellement décomposer d'éventuelles traces de composés soufrés et azotés présentes dans la fraction lourde. Cette étape d'hydrotraitement est non convertissante, c'est à dire que la conversion de la fraction 370°C$^+$ en fraction 370°C$^-$ est de préférence inférieure à 20% en poids, de manière préférée inférieure à 10% en poids et de manière très préférée inférieure à 5% en poids.

Les catalyseurs utilisés dans cette étape (b) sont des catalyseurs d'hydrotraitement décrits dans l'étape (b) du premier mode de réalisation.

Dans le réacteur d'hydrotraitement (7), la charge est mise en contact en présence d'hydrogène et du catalyseur à des températures et des pressions opératoires permettant de réaliser l'hydrogénation des oléfines présents dans la charge. De manière préférée, le catalyseur et les conditions opératoires choisies permettront également d'effectuer l'hydrodeoxygénation c'est à dire la décomposition des composés oxygénés (principalement des alcools) et/ou l'hydrodésulfuration ou l'hydrodéazotation des traces éventuelles de composés soufrés et/ou azotés présents dans la charge. Les températures réactionnelles utilisées dans le réacteur d'hydrotraitement sont comprises entre 100 et 400°C, de préférence entre 150 et 350°C, de façon encore plus préférée entre 150 et 300°C. La gamme de pression totale utilisée varie de 5 à 150 bar, de préférence entre 10 et 100 bar et de manière encore plus préférée entre 10 et 90 bar. L'hydrogène qui alimente le réacteur d'hydrotraitement est introduit à un débit tel que le rapport volumique hydrogène/hydrocarbures soit compris entre 50 à 3000 normaux litres par litre, de préférence entre 100 et 2000 normaux litres par litre et de façon encore plus préférée entre 150 et 1500 normaux litres par litre. Le débit de charge est tel que la vitesse volumique horaire est comprises entre 0,1 et 10 $h^{-1}$, de préférence entre 0,2 et 5 $h^{-1}$ et de manière encore plus préférée entre 0,2 et 3 $h^{-1}$. Dans ces conditions, la teneur en molécules insaturées et oxygénées est réduite à moins de 0,5% en poids et à environ moins de 0,1% en poids en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 20% en poids, de préférence est inférieure à 10% en poids et de façon encore plus préférée est inférieure à 5% en poids.

Étape (c)

L'effluent (conduite 8) issu du réacteur (7) d'hydrotraitement est éventuellement introduit dans une zone (9) d'enlèvement d'eau qui a pour but d'éliminer au moins en partie l'eau produite lors des réactions d'hydrotraitement. Cette élimination d'eau peut s'effectuer avec ou sans élimination de la fraction gazeuse $C_4^-$ qui est généralement produite lors de l'étape d'hydrotraitement. On entend par élimination de l'eau, l'élimination de l'eau produite par les réactions d'hydrodéoxygénation des oxygénés mais on peut aussi y inclure l'élimination au moins en partie de l'eau de saturation des hydrocarbures. L'élimination de l'eau peut être réalisée par toutes les méthodes et techniques connues de l'homme

du métier, par exemple par séchage, passage sur un dessicant, flash, décantation...

Etape (d)

La fraction lourde (éventuellement hydrotraitée) ainsi séchée est alors introduite (conduite 10) ainsi qu'éventuellement un flux d'hydrogène (conduite 11), dans la zone (12) contenant le catalyseur mis en oeuvre dans le procédé selon l'invention et dans les conditions opératoires du procédé de la présente invention. Une autre éventualité du procédé aussi selon l'invention consiste à envoyer la totalité de l'effluent sortant du réacteur d'hydrotraitement (sans séchage) dans le réacteur contenant le catalyseur selon l'invention et de préférence en même temps qu'un flux d'hydrogène. Le catalyseur utilisé pour réaliser les réactions d'hydrocraquage et d'hydroisomérisation de la fraction lourde est le catalyseur défini dans la première partie de la demande de brevet.
Les conditions opératoires dans lesquelles est effectuée cette étape (d) sont les conditions opératoires décrites conformément au procédé selon l'invention.
L'étape d'hydroisomérisation et d'hydrocraquage est conduite dans des conditions telles que la conversion par passe en produits à points d'ébullition supérieurs ou égaux à 370°C en des produits ayant des points d'ébullition inférieurs à 370°C est supérieure à 40% poids, et de façon encore plus préférée d'au moins 50%, de préférence supérieure à 60%, de manière à obtenir des distillats moyens (gazole et kérosène) ayant des propriétés à froid suffisamment bonnes (point d'écoulement, point de congélation) pour satisfaire aux spécifications en vigueur pour ce type de carburant.

Étape (e)

L'effluent (fraction dite hydrocraquée et hydroisomérisée) en sortie du réacteur (12), étape (d), est envoyé dans un train de distillation (13), qui intègre une distillation atmosphérique et éventuellement une distillation sous vide, qui a pour but de séparer les produits de conversion de point d'ébullition inférieur à 340°C et de préférence inférieur à 370°C et incluant notamment ceux formés lors de l'étape (d) dans le réacteur (12), et de séparer la fraction résiduelle dont le point initial d'ébullition est généralement supérieur à au moins 340°C et de préférence supérieur ou égal à au moins 370°C. Parmi les produits de conversion, il est séparé outre les gaz légers $C_1$-$C_4$ (conduite 14) au moins une fraction essence (conduite 15), et au moins une fraction distillats moyens kérosène (conduite 16) et gazole (conduite 17). La fraction résiduelle dont le point initial d'ébullition est généralement supérieur à au moins 340°C et de préférence supérieur ou égal à au moins 370°C est recyclée (conduite 18) en tête du réacteur (12) d'hydroisomérisation et d'hydrocraquage.
Il peut être également avantageux de recycler (conduite 19) dans l'étape (d) (réacteur 12) une partie du kérosène et/ou du gazole ainsi obtenus.

**c) Troisième mode de réalisation**

Un autre mode de réalisation de l'invention comprend les étapes suivantes :

a) fractionnement (étape a) de la charge en au moins trois fractions :

- au moins une fraction intermédiaire ayant un point d'ébullition initial T1 compris entre 120 et 200°C, et un point d'ébullition final T2 supérieur à 300°C et inférieur à 410°C,
- au moins une fraction légère bouillant au-dessous de la fraction intermédiaire,
- au moins une fraction lourde bouillant au-dessus de la fraction intermédiaire.

b) Hydrotraitement (étape b) d'au moins une partie de ladite fraction intermédiaire, puis passage (étape d) dans un procédé de traitement d'au moins une partie de la fraction hydrotraitée sur un catalyseur hydroisomérisant
c) élimination d'au moins une partie de l'eau produite lors des réactions d'hydrotraitement et éventuellement CO, $CO_2$, $NH_3$, $H_2S$,
d) passage (étape d) dans le procédé selon l'invention d'une partie au moins de ladite fraction lourde avec une conversion des produits 370°C$^+$ en produits 370°C$^-$ supérieure à 40% poids.
e) et f) Distillation (étapes e et f) d'au moins une partie des fractions hydrocraquées / hydroisomérisées pour obtenir des distillats moyens.

La description de ce mode de réalisation sera faite en se référant à la figure 3 sans que la figure 3 limite l'interprétation.

Étape (a)

L'effluent issu de l'unité de synthèse Fischer-Tropsch comporte majoritairement des paraffines, mais contient aussi des oléfines et des composés oxygénés tels que des alcools. Il contient aussi de l'eau, du $CO_2$, du CO et de l'hydrogène non réagi ainsi que des composés hydrocarbures légers $C_1$ à $C_4$ sous forme de gaz, voire éventuellement des impuretés soufrées ou azotées. L'effluent issu de l'unité de synthèse Fischer-Tropsch arrivant par la conduite (1) est fractionné dans un zone de fractionnement (2) en au moins trois fractions :

- au moins une fraction légère (sortant par la conduite 3) dont les composés constituants ont des points d'ébullition inférieurs à une température T1 comprise entre 120 et 200°C, et de préférence entre 130 et 180°C et de manière encore plus préférée à une température d'environ 150°C. En d'autres termes le point de coupe est situé entre 120 et 200°C,
- au moins une fraction intermédiaire (conduite 4) comportant les composés dont les points d'ébullition sont compris entre le point de coupe T1, précédemment défini, et une température T2 supérieure à 300°C, de manière encore plus préférée supérieure à 350°C et inférieure à 410°C ou mieux à 370°C,
- au moins une fraction dite lourde (conduite 5) comportant les composés ayant des points d'ébullition supérieurs au point de coupe T2 précédemment défini.

Le fait de couper à 370°C permet de séparer au moins 90% en poids des oxygénés et des oléfines, et le plus souvent au moins 95% en poids. La coupe lourde à traiter est alors purifiée et une élimination des hétéroatomes ou insaturés par hydrotraitement n'est alors pas nécessaire.
Le fractionnement est obtenu ici par distillation, mais il peut être réalisé en une ou plusieurs étapes et par d'autres moyens que la distillation.
Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les trois fractions décrites ci-dessus.
La fraction légère n'est pas traitée selon le procédé de l'invention mais peut par exemple constituer une bonne charge pour une unité pétrochimique et plus particulièrement pour un vapocraqueur (installation 6 de vapocraquage).
Les fractions plus lourdes précédemment décrites sont traitées selon le procédé de l'invention.

Étape (b)

Ladite fraction intermédiaire est admise via la ligne (4), en présence d'hydrogène amené par la tubulure (7), dans une zone d'hydrotraitement (8) contenant un catalyseur d'hydrotraitement, qui a pour objectif de réduire la teneur en composés oléfiniques et insaturés ainsi que d'éventuellement décomposer les composés oxygénés (principalement des alcools) présents dans la fraction lourde décrite ci-dessus, ainsi que d'éventuellement décomposer d'éventuelles traces de composés soufrés et azotés présentes dans la fraction lourde. Cette étape d'hydrotraitement est non convertissante, c'est à dire que la conversion de la fraction 150°C$^+$ en fraction 150°C$^-$ est de préférence inférieure à 20% en poids, de manière préférée inférieure à 10% en poids et de manière très préférée inférieure à 5% en poids.
Les catalyseurs utilisés dans cette étape (b) sont des catalyseurs d'hydrotraitement décrit dans l'étape (b) du premier mode de réalisation.
Dans le réacteur d'hydrotraitement (8), la charge est mise en contact du catalyseur en présence d'hydrogène et à des températures et des pressions opératoires permettant de réaliser l'hydrogénation des oléfines présents dans la charge. De manière préférée, le catalyseur et les conditions opératoires choisies permettront également d'effectuer l'hydrodeoxygénation c'est à dire la décomposition des composés oxygénés (principalement des alcools) et/ou l'hydrodésulfuration ou l'hydrodéazotation des traces éventuelles de composés soufrés et/ou azotés présents dans la charge. Les températures réactionnelles utilisées dans le réacteur d'hydrotraitement sont comprises entre 100 et 400°C, de préférence entre 150 et 350°C, de façon encore plus préférée entre 150 et 300°C. La gamme de pression totale utilisée varie de 5 à 150 bar, de préférence entre 10 et 100 bar et de manière encore plus préférée entre 10 et 90 bar. L'hydrogène qui alimente le réacteur d'hydrotraitement est introduit à un débit tel que le rapport volumique hydrogène/hydrocarbures soit compris entre 50 à 3000 normaux litres par litre, de préférence entre 100 et 2000 normaux litres par litre et de façon encore plus préférée entre 150 et 1500 normaux litres par litre. Le débit de charge est tel que la vitesse volumique horaire est comprises entre 0,1 et 10 $h^{-1}$, de préférence entre 0,2 et 5 $h^{-1}$ et de manière encore plus préférée entre 0,2 et 3 $h^{-1}$. Dans ces conditions, la teneur en molécules insaturées et oxygénées est réduite à moins de 0,5% en poids et à environ moins de 0,1% en poids en général. L'étape d'hydrotraitement est conduite dans des conditions telles que la conversion en produits ayant des points d'ébullition supérieurs ou égaux à 150°C en des produits ayant des points d'ébullition inférieurs à 150°C est limitée à 20% en poids, de préférence est inférieure à 10% en poids et de façon encore plus préférée est inférieure à 5% en poids.

Étape (c)

L'effluent issu du réacteur d'hydrotraitement est éventuellement introduit dans une zone (9) d'enlèvement d'eau qui a pour but d'éliminer au moins une partie de l'eau produite lors des réactions d'hydrotraitement. Cette élimination d'eau peut s'effectuer avec ou sans élimination de la fraction gazeuse $C_4^-$ qui est généralement produite lors de l'étape d'hydrotraitement. On entend par élimination de l'eau, l'élimination de l'eau produite par les réactions d'hydrodeoxygénation des oxygénés, mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation....

Étape (d)

La fraction ainsi éventuellement séchée est alors introduite (conduite 10), ainsi qu'éventuellement un flux d'hydrogène, (conduite 11) dans la zone (12) contenant un catalyseur hydroisomérisant. Une autre éventualité du procédé aussi selon l'invention consiste à envoyer la totalité de l'effluent sortant du réacteur d'hydrotraitement (sans séchage) dans le réacteur contenant le catalyseur hydroisomérisant et de préférence en même temps qu'un flux d'hydrogène.

Les catalyseurs hydroisomérisants sont tels que décrits dans l'étape (d) du premier mode de réalisation.

Les conditions opératoires dans lesquelles est effectuée cette étape (d) sont les suivantes. La pression est maintenue entre 2 et 150 bar et de préférence entre 5 et 100 bar et avantageusement de 10 à 90 bar, la vitesse spatiale est comprise entre 0,1 $h^{-1}$ et 10 $h^{-1}$ et de préférence entre 0,2 et 7 $h^{-1}$ est avantageusement entre 0,5 et 5,0 $h^{-1}$. Le débit d'hydrogène est ajusté pour obtenir un rapport de 100 à 2000 normaux litres d'hydrogène par litre de charge et préférentiellement entre 150 et 1500 normaux litres d'hydrogène par litre de charge. La température utilisée dans cette étape est comprise entre 200 et 450°C et préférentiellement de 250°C à 450°C avantageusement de 300 à 450°C, et encore plus avantageusement supérieure à 320°C ou par exemple entre 320 et 420°C.

L'étape (d) d'hydroisomérisation est avantageusement conduite dans des conditions telles que la conversion par passe en produits à points d'ébullition supérieurs ou égaux à 150°C en des produits ayant des points d'ébullition inférieurs à 150°C est la plus faible possible, de préférence inférieure à 50%, de manière encore plus préférée inférieure à 30%, et permet d'obtenir des distillats moyens (gazole et kérosène) ayant des propriétés à froid (point d'écoulement et de congélation) suffisamment bonnes pour satisfaire aux spécifications en vigueur pour ce type de carburant.

Ainsi dans cette étape (d), on cherche à favoriser l'hydroisomérisation plutôt que l'hydrocraquage.

Étape (e)

Ladite fraction lourde dont les points d'ébullition sont supérieurs au point de coupe T2, précédemment défini, est introduite via la ligne (5) dans une zone (13) où elle est mise, en présence d'hydrogène (26), au contact d'un catalyseur selon l'invention et dans les conditions opératoires du procédé de la présente invention afin de produire une coupe distillats moyens (kérosène + gazole) présentant de bonnes propriétés à froid.

Le catalyseur utilisé dans la zone (13) de l'étape (e) pour réaliser les réactions d'hydrocraquage et d'hydroisomérisation de la fraction lourde est le catalyseur défini dans la première partie de la demande de brevet. Il est à noter que les catalyseurs mis en oeuvre dans les réacteurs (12) et (13) peuvent être strictement identiques ou différents (par exemple, en faisant varier la proportion et la nature du solide acide dans le catalyseur, la nature du liant ou bien la quantité et nature de la phase hydrogénante).

Durant cette étape (e) la fraction entrant dans le réacteur subit au contact du catalyseur et en présence d'hydrogène essentiellement des réactions d'hydrocraquage qui, accompagnés de réactions d'hydroisomérisation des n-paraffines, vont permettre d'améliorer la qualité des produits formés et plus particulièrement les propriétés à froid du kérosène et du gazole, et également d'obtenir de très bons rendements en distillats moyens. La conversion en produits ayant des points d'ébullition supérieurs ou égal à 370°C en produits à points d'ébullition inférieurs à 370°C est supérieure à 40% poids, souvent d'au moins 50% et de préférence supérieure ou égal à 60%.

Dans cette étape (e), on cherchera donc à favoriser l'hydrocraquage, mais de préférence en limitant le craquage des distillats moyens.

Le choix des conditions opératoires permet d'ajuster finement la qualité des produits (gazole, kerosène) et en particulier les propriétés à froid du kerosène, tout en conservant un bon rendement en gazole et/ou kerosène. Le procédé selon l'invention permet de façon tout à fait intéressante de produire à la fois du kerosène et du gazole et qui sont de bonne qualité tout en minimisant la production de coupes plus légères non désirées (naphta, GPL).

Étape (f)

L'effluent en sortie du réacteur (12), étape (d) est envoyé dans un train de distillation, qui intègre une distillation atmosphérique et éventuellement une distillation sous vide, et qui a pour but de séparer d'une part les produits légers inévitablement formés lors de l'étape (d) par exemple les gaz ($C_1$-$C_4$) (conduite 14) et une coupe essence (conduite 15), et de distiller au moins une coupe gazole (conduite 17) et kérosène (conduite 16). Les fractions gazole et kérosène peuvent être recyclées (conduite 25) en partie, conjointement ou de façon séparée, en tête du réacteur (12) d'hydroisomérisation de l'étape (d).

L'effluent en sortie de l'étape (e), est soumis à une étape de séparation dans un train de distillation de manière à séparer d'une part les produits légers inévitablement formés lors de l'étape (e) par exemple les gaz ($C_1$-$C_4$) (conduite 18) et une coupe essence (conduite 19), à distiller une coupe gazole (conduite 21) et kérosène (conduite 20) et à distiller la fraction (conduite 22) bouillant au-dessus de gazole, c'est à dire dont les composés qui la constituent ont des points d'ébullition supérieurs à ceux des distillats moyens (kérosène + gazole). Cette fraction, dite fraction résiduelle, présente généralement un point d'ébullition initial d'au moins 350°C, de préférence supérieure à 370°C. Cette fraction non hydrocraquée est avantageusement recyclée en tête du réacteur (13) d'hydroisomérisation et d'hydrocraquage de l'étape (e).

Il peut être également avantageux de recycler une partie du kérosène et/ou du gazole dans l'étape (d), l'étape (f) ou les deux. De façon préférée, l'une au moins des fractions kérosène et/ou gazole est recyclée en partie (conduite 25) dans l'étape (d) (zone 12). On a pu constater qu'il est avantageux de recycler une partie du kérosène pour améliorer ses propriétés à froid.

Avantageusement et dans le même temps, la fraction non hydrocraquée est recyclée en partie dans l'étape (f) (zone 13).

Il va sans dire que les coupes gazole et kérosène sont de préférence récupérées séparément, mais les points de coupe sont ajustés par l'exploitant en fonction de ses besoins.

Sur la figure 3, on a représenté deux colonnes (23) et (24) de distillation, mais une seule peut être utilisée pour traiter l'ensemble des coupes issues de zones (12) et (13).

Sur la figure 3, on a représenté seulement le recyclage du kérosène sur le catalyseur du réacteur (12). Il va sans dire qu'on peut aussi bien recycler une partie du gazole (séparément ou avec le kérosène) et de préférence sur le même catalyseur que le kérosène. On peut également recycler une partie du kérosène et/ou du gazole produits dans les lignes (20) et (21).

**d) Quatrième mode de réalisation**

Un autre mode de réalisation de l'invention comprend les étapes suivantes :

a) éventuel fractionnement de la charge en au moins une fraction lourde à point d'ébullition initial compris entre 120 et 200°C, et au moins une fraction légère bouillant en-dessous de ladite fraction lourde,
b) éventuel hydrotraitement d'une partie au moins de la charge ou de la fraction lourde, éventuellement suivi de
c) l'élimination d'au moins une partie de l'eau,
d) passage d'une partie au moins de l'effluent ou de la fraction éventuellement hydrotraité dans le procédé selon l'invention sur un premier catalyseur selon l'invention,
e) distillation de l'effluent hydroisomérisé et hydrocraqué pour obtenir des distillats moyens (kérosène, gazole) et une fraction résiduelle bouillant au-dessus des distillats moyens,
f) passage d'au moins une partie de ladite fraction lourde résiduelle et/ou d'une partie desdits distillats moyens dans le procédé selon l'invention sur un second catalyseur selon l'invention, et distillation de l'effluent résultant pour obtenir des distillats moyens.

La description de ce mode de réalisation sera faite en se référant aux figures 4 et 5, sans que ces figures limitent l'interprétation.

Etape (a)

Lorsque cette étape est mise en oeuvre, l'effluent issu de l'unité de synthèse Fischer-Tropsch est fractionné (par exemple par distillation) en au moins deux fractions : au moins une fraction légère et au moins une fraction lourde à point d'ébullition initial égal à une température comprise entre 120 et 200°C et de préférence entre 130 et 180°C et de manière encore plus préférée à une température d'environ 150°C, en d'autres termes le point de coupe est situé entre 120 et 200°C.

La fraction lourde présente généralement des teneurs en paraffines d'au moins 50% en poids.

Ce fractionnement peut être réalisé par des méthodes bien connues de l'homme du métier telles que le flash, la distillation etc... A titre d'exemple non limitatif, l'effluent issu de l'unité de synthèse Fischer-Tropsch sera soumis à un flash, une décantation pour éliminer l'eau et une distillation afin d'obtenir au moins les deux fractions décrites ci-dessus.

La fraction légère n'est pas traitée selon le procédé de l'invention mais peut par exemple constituer une bonne charge pour la pétrochimie et plus particulièrement pour une unité de vapocraquage. Au moins une fraction lourde précédemment décrite est traitée selon le procédé de l'invention.

Etape (b)

Eventuellement, cette fraction ou une partie au moins de la charge initiale, est admise via la ligne (1) en présence d'hydrogène (amené par la conduite (2)) dans une zone (3) contenant un catalyseur d'hydrotraitement qui a pour objectif de réduire la teneur en composés oléfiniques et insaturés ainsi que d'éventuellement décomposer les composés oxygénés (principalement des alcools) présents dans la fraction lourde décrite ci-dessus, ainsi que d'éventuellement décomposer d'éventuelles traces de composés soufrés et azotés présentes dans la fraction lourde. Cette étape d'hydrotraitement est non convertissante, c'est à dire que la conversion de la fraction 370°C$^+$ en fraction 370°C$^-$ est de préférence inférieure à 20% en poids, de manière préférée inférieure à 10% en poids et de manière très préférée inférieure à 5% en poids.

Les catalyseurs utilisés dans cette étape (b) sont décrit dans l'étape (b) du premier mode de réalisation.

Dans le réacteur d'hydrotraitement (3), la charge est mise en contact du catalyseur en présence d'hydrogène et à des températures et des pressions opératoires permettant de réaliser l'hydrogénation des oléfines présentes dans la charge. De manière préférée, le catalyseur et les conditions opératoires choisies permettront également d'effectuer l'hydrodeoxygénation c'est à dire la décomposition des composés oxygénés (principalement des alcools) et/ou l'hydrodésulfuration ou l'hydrodéazotation des traces éventuelles de composés soufrés et/ou azotés présents dans la charge. Les températures réactionnelles utilisées dans le réacteur d'hydrotraitement sont comprises entre 100 et 400°C, de préférence entre 150 et 350°C, de façon encore plus préférée entre 150 et 300°C. La gamme de pression totale utilisée varie de 5 à 150 bar, de préférence entre 10 et 100 bar et de manière encore plus préférée entre 10 et 90 bar. L'hydrogène qui alimente le réacteur d'hydrotraitement est introduit à un débit tel que le rapport volumique hydrogène/hydrocarbures soit compris entre 50 et 3000 normaux litres par litre, de préférence entre 100 et 2000 normaux litres par litre et de façon encore plus préférée entre 150 et 1500 normaux litres par litre. Le débit de charge est tel que la vitesse volumique horaire est comprise entre 0,1 et 10 $h^{-1}$, de préférence entre 0,2 et 5 $h^{-1}$ et de manière encore plus préférée entre 0,2 et 3 $h^{-1}$. Dans ces conditions, la teneur en molécules insaturées et oxygénées est réduite à moins de 0,5% en poids et à environ moins de 0,1 % en poids en général. L'étape d'hydrotraitement est conduite dans des conditions telles que la conversion en produits ayant des points d'ébullition supérieurs ou égaux à 370°C en des produits ayant des points d'ébullition inférieurs à 370°C est limitée à 20% en poids, de préférence est inférieure à 10% en poids et de façon encore plus préférée est inférieure à 5% en poids.

Étape (c)

L'effluent (conduite 4) issu du réacteur (3) d'hydrotraitement est éventuellement introduit dans une zone (5) d'enlèvement d'eau qui a pour but d'éliminer au moins en partie l'eau produite lors des réactions d'hydrotraitement. Cette élimination d'eau peut s'effectuer avec ou sans élimination de la fraction gazeuse $C_4^-$ qui est généralement produite lors de l'étape d'hydrotraitement. On entend par élimination de l'eau, l'élimination de l'eau produite par les réactions d'hydrodéoxygénation des oxygénés mais on peut aussi y inclure l'élimination au moins en partie de l'eau de saturation des hydrocarbures. L'élimination de l'eau peut être réalisée par toutes les méthodes et techniques connues de l'homme du métier, par exemple par séchage, passage sur un dessicant, flash, décantation....

Etape (d)

Une partie au moins et de préférence la totalité de la fraction hydrocarbonée (une partie au moins de la charge ou une partie au moins de la fraction lourde de l'étape a) ou une partie au moins de la fraction ou de la charge hydrotraitée et éventuellement séchée) est alors introduite (conduite 6) ainsi qu'éventuellement un flux d'hydrogène (conduite 7) dans la zone (8) contenant le catalyseur selon l'invention. Une autre éventualité du procédé aussi selon l'invention consiste à envoyer une partie ou la totalité de l'effluent sortant du réacteur d'hydrotraitement (sans séchage) dans le réacteur contenant le catalyseur selon l'invention et de préférence en même temps qu'un flux d'hydrogène.

Avant utilisation dans la réaction, si la phase hydrogénante du catalyseur est constituée d'au moins un métal noble, le métal contenu dans le catalyseur doit être réduit. Une des méthodes préférées pour conduire la réduction du métal est le traitement sous hydrogène à une température comprise entre 150°C et 650°C et une pression totale comprise entre 1 et 250 bar. Par exemple, une réduction consiste en un palier à 150°C de 2 heures puis une montée en température

jusqu'à 450°C à la vitesse de 1°C/min puis un palier de 2 heures à 450°C; durant toute cette étape de réduction, le débit d'hydrogène est de 1000 normaux litres hydrogène par litre de catalyseur. Notons également que toute méthode de réduction ex-situ est convenable.

Étape (e)

L'effluent hydroisomérisé et hydrocraqué en sortie du réacteur (8), étape (d), est envoyé dans un train de distillation (9) qui intègre une distillation atmosphérique et éventuellement une distillation sous vide qui a pour but de séparer les produits de conversion de point d'ébullition inférieur à 340°C et de préférence inférieur à 370°C et incluant notamment ceux formés lors de l'étape (d) dans le réacteur (8), et de séparer la fraction résiduelle dont le point initial d'ébullition est généralement supérieur à au moins 340°C et de préférence supérieur ou égal à au moins 370°C. Parmi les produits de conversion et hydroisomérisés il est séparé, outre les gaz légers $C_1$-$C_4$ (conduite 10) au moins une fraction essence (conduite 11), et au moins une fraction distillats moyens kérosène (conduite 12) et gazole (conduite 13).

Etape (f)

Le procédé selon l'invention utilise une seconde zone (16) contenant un catalyseur d'hydrocraquage et d'hydroisomérisation décrit dans la première partie du brevet. Il passe sur ce catalyseur, en présence d'hydrogène (conduite 15) un effluent choisi parmi une partie du kérosène produit (conduite 12), une partie du gazole (conduite 13) et la fraction résiduelle et de préférence, la fraction résiduelle dont le point initial d'ébullition est généralement supérieur à au moins 370°C.

Durant cette étape la fraction entrant dans le réacteur (16) subit au contact du catalyseur et en présence d'hydrogène des réactions d'hydroisomérisation et/ou d'hydrocraquage qui vont permettre d'améliorer la qualité des produits formés et plus particulièrement les propriétés à froid du kérosène et du gazole, et d'obtenir des rendements en distillats moyens améliorés par rapport à l'art antérieur.

Le choix des conditions opératoires permet d'ajuster finement la qualité des produits (distillats moyens) et en particulier les propriétés à froid.

Les conditions opératoires dans lesquelles est effectuée cette étape (f) sont les conditions opératoires conformément au procédé selon l'invention.

L'exploitant ajustera les conditions opératoires sur le premier et second catalyseur d'hydrocraquage et d'hydroisomérisation de façon à obtenir les qualités de produits et les rendements souhaités.

Ainsi, de façon générale, sur le premier catalyseur, la conversion par passe en produits à points d'ébullition supérieurs ou égaux à 150°C en des produits à points d'ébullition inférieurs à 150°C est inférieure à 50% poids, de préférence inférieure à 30% poids. Ces conditions permettent au particulier d'ajuster le rapport kérosène/gazole produit ainsi que les propriétés à froid des distillats moyens, et plus particulièrement du kérosène.

Également de façon générale, sur le second catalyseur, lorsque la fraction résiduelle est traitée, la conversion par passe en produits à points d'ébullition supérieurs ou égaux à 370°C en produits à points d'ébullition inférieurs à 370°C, est supérieure à 40% en poids, de préférence supérieure à 50% , ou mieux à 60%. Il peut même s'avérer avantageux d'avoir des conversions d'au moins 80% poids.

Lorsque une partie du kérosène et/ou du gazole est traitée sur le second catalyseur, la conversion par passe en produits à points d'ébullition supérieurs ou égaux à 150°C en des produits à points d'ébullition inférieurs à 150°C est inférieure à 50% en poids, de préférence inférieure à 30%.

De façon générale les conditions opérations appliquées dans les réacteurs (8) et (16) peuvent être différentes ou identiques. De façon préférée les conditions opératoires utilisées dans les deux réacteurs d'hydroisomérisation et hydrocraquage sont choisies différentes en termes de pression opératoire, température, vitesse volumique horaire et rapport $H_2$/charge. Ce mode de réalisation permet à l'exploitant d'ajuster les qualités et/ou rendements en kérosène et gazole.

L'effluent issu du réacteur (16) est ensuite envoyé via la ligne (17) dans le train distillation de manière à séparer les produits de conversion, essence, kérosène et gazole.

Sur la figure 4, il est représenté un mode de réalisation avec la fraction résiduelle (conduite 14) passant dans la zone (16) d'hydroisomérisation et d'hydrocraquage (étape f), l'effluent obtenu étant envoyé (conduite 17) dans la zone (9) de séparation.

Avantageusement, dans le même temps, le kérosène et/ou le gazole peut être en partie recyclé (conduite 18) dans la zone (8) d'hydroisomérisation et d'hydrocraquage (étape d) sur le premier catalyseur.

Sur la figure 5, une partie du kérosène et/ou du gazole produits passent dans la zone (16) d'hydroisomérisation et d'hydrocraquage (étape f), l'effluent obtenu étant envoyé (conduite 17) dans la zone (9) de séparation.

Dans le même temps, la fraction résiduelle (conduite 14) est recyclée dans la zone (8) d'hydroisomérisation et d'hydrocraquage (étape d) sur le premier catalyseur.

On a pu constater qu'il est avantageux de recycler une partie du kérosène sur un catalyseur d'hydrocraquage et d'hydroisomérisation pour améliorer ses propriétés à froid.

Sur les figures, on a représenté seulement le recyclage du kérosène. Il va sans dire qu'on peut aussi bien recycler une partie du gazole (séparément ou avec le kérosène) et de préférence sur le même catalyseur que le kérosène.

L'invention n'est pas limitée à ces quatre modes de réalisation.

Les produits obtenus

Le(s) gazole(s) obtenu (s) présente(nt) un point d'écoulement d'au plus 0°C, généralement inférieur à - 10°C et souvent inférieur à -15°C. L'indice de cétane est supérieur à 60, généralement supérieur à 65, souvent supérieur à 70.

Le(s) kérosène(s) obtenu(s) présente(nt) un point de congélation d'au plus -35°C, généralement inférieur à -40°C. Le point de fumée est supérieur à 25 mm, généralement supérieur à 30 mm. Dans ce procédé, la production d'essence (non recherchée) est la plus faible possible. Le rendement en essence sera toujours inférieur à 50% en poids, de préférence inférieur à 40% en poids, avantageusement inférieur à 30% en poids ou encore à 20% en poids ou même à 15% en poids.

**Exemple 1: Préparation du catalyseur d'hydrotraitement (C1)**

Le catalyseur est un catalyseur industriel à base de métal noble de type palladium sur alumine avec une teneur en palladium de 0,3% poids par rapport au poids total du catalyseur fini, fourni par la société AXENS.

**Exemple 2 : Préparation d'un catalyseur d'hydroisomérisation et d'hydrocraquage conforme à l'invention (C4)**

**a) Synthèse d'un solide cristallisé IZM-2 (C2)**

préparation du dibromure de 1,6-bis(méthylpiperidinium)hexane

50 grammes de 1,6-dibromohexane (0,20 mole, 99%, Alfa Aesar) sont ajoutés dans un ballon de 1 L contenant 50 grammes de N-méthylpipéridine (0,51 mole, 99%, alfa Aesar) et 200 ml d'éthanol. Le milieu réactionnel est agité et porté à reflux pendant 5 h. Le mélange est ensuite refroidi à température ambiante puis filtré. Le mélange est versé dans 300 ml de diéthyléther froid puis le précipité formé est filtré et lavé avec 100 ml de diéthyléther. Le solide obtenu est recristallisé dans un mélange éthanol/éther. Le solide obtenu est séché sous vide pendant 12 h. On obtient 71 grammes d'un solide blanc (soit un rendement de 80%). Le produit possède le spectre 1H RMN attendu. 1H RMN (D2O, ppm/TMS): 1,27 (4H,m); 1,48 (4H,m) ; 1,61 (4H,m) ; 1,70 (8H,m) ; 2,85 (6H,s) ; 3,16 (12H,m).

Préparation d'un solide IZM-2 selon l'invention (C2)

30 grammes d'une suspension colloïdale de silice, connue sous le terme commercial Ludox AS-40 commercialisée par Aldrich, est incorporée dans une solution composée de 0,158 grammes d'aluminate de sodium (Carlo Erba), 2,433 grammes de soude (Prolabo), 14,7333 grammes de dibromure de 1,6-bis(méthylpiperidinium)hexane et de 1.01,561 grammes d'eau déionisée. La composition molaire du mélange est la suivante : $SiO_2$ ; 0,004 $Al_2O_3$ ; 0,17 $Na_2O$ ; 0,17 1,6-bis(méthylpiperidinium)hexane; 33,33 $H_2O$. Le mélange est agité vigoureusement pendant une demi-heure. Le mélange est ensuite transféré, après homogénéisation, dans un autoclave. L'autoclave est chauffé pendant 6 jours à 170°C sous agitation (200 tours / min). Le produit cristallisé obtenu est filtré, lavé à l'eau déionisée (pour atteindre un pH neutre) puis séché une nuit à 100°C. Le solide est ensuite introduit dans un four à moufle où est réalisée la calcination : le cycle de calcination comprend une montée en température jusqu'à 200°C, un palier à 200°C maintenu durant 2 heures, une montée en température jusqu'à 550°C suivi d'un palier à 550°C maintenu durant 8 heures puis un retour à la température ambiante.

Le produit solide calciné a été analysé par diffraction des rayons X et identifié comme étant constitué de solide IZM-2.

**b) préparation du support IZM-2 / liant selon l'invention (C3)**

Un support IZM-2 / liant selon l'invention est fabriqué de la façon suivante : 7 grammes du solide IZM-2 (C1) sont mélangés à 43 grammes d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% en poids (7% en poids d'acide par gramme de gel sec) puis malaxé pendant 15 minutes. La pâte malaxée est ensuite extrudée à travers une filière de diamètre 1,2 mm. Les extrudés sont ensuite

calcinés à 500°C (rampe de montée de 5°C/min) durant 2 heures en lit traversé sous air sec (1 l air / h / gramme de solide).

Les extrudés ainsi calcinés sont échangé trois fois au contact d'une solution de nitrate d'ammonium afin d'obtenir le solide IZM-2 sous sa forme acide.

Les 50 grammes d'extrudés sont mis au contact de 400 ml d'une solution 10N de nitrate d'ammonium et le mélange est porté à reflux sous agitation durant 4 heures. Le mélange est ensuite filtré puis les extrudés rincés avec 800 ml d'eau distillée et séchés en couche mince durant une nuit en étuve à 150°C. Cette opération est effectuée trois fois. Après le troisième échange, Les extrudés sont ensuite calcinés à 450°C (rampe de montée de 5°C/min) durant deux heures en lit traversé sous air sec (2 l air / h / gramme de solide). La teneur pondérale en sodium mesurée par adsorption atomique sur les extrudés échangés et calcinés est inférieure à 50 ppm.

**c) dépôt de la fonction hydro-déshydrogénante (C4)**

Les extrudés de IZM-2 / liant (C2) sont soumis à une étape d'imprégnation à sec par une solution aqueuse d'acide hexachloroplatinique $H_2PtCl_6$, laissés à maturer en maturateur à eau durant 24 heures à température ambiante puis calcinés à 500°C (rampe de montée de 5°C/min) durant deux heures en lit traversé sous air sec (2 l air / h / gramme de solide). La teneur pondérale en platine du catalyseur fini après calcination est de 0,80%. Sa dispersion mesurée par titration $H_2$-$O_2$ est de 85% et le coefficient de répartition du platine mesuré par microsonde de Castaing est égal à 0,92.

**Exemple 3 : traitement d'une charge issue du Fischer-Tropsch conformément au second mode de réalisation du procédé selon l'invention**

Une charge issue de la synthèse Fischer Tropsch sur un catalyseur au cobalt est séparée en deux fractions selon une étape a), la fraction la plus lourde ayant un point d'ébullition initial égal à ? présente les caractéristiques fournies dans le tableau 1.

Cette fraction lourde est traitée en lit traversé à hydrogène perdu sur le catalyseur d'hydrotraitement C1 dans des conditions opératoires qui permettent l'élimination des composés oléfiniques et oxygénés ainsi que des traces d'azote, selon une étape b). Les conditions opératoires sélectionnées sont les suivantes:

- VVH (volume de charge / volume de catalyseur / heure) = 2 $h^{-1}$
- pression totale de travail: 50 bar
- rapport hydrogène / charge: 200 normaux litres / litre
- température: 270°C

Tableau 1: caractéristiques de la fraction lourde.

| | |
|---|---|
| Distillation Simulée | T (5% poids): 175°C<br>T (25% poids): 246°C<br>T (50% poids): 346°C<br>T (75% poids): 444°C<br>T (95% poids): 570°C |
| composés 370°C$^+$ (par GC) | 43% poids |
| densité à 15°C | 0,797 |
| teneur en azote | 7 ppm |
| teneur en soufre | < limite détection |
| analyse détaillée de la fraction $C_{30}^-$ (GC)<br>n-paraffines<br>i-paraffines<br>oléfines<br>oxygénés | <br>82% poids<br>6% poids<br>11 % poids<br>1% poids |

Après cet hydrotraitement, les teneurs en oléfines, oxygénés et composés azotés de l'effluent tombent en dessous des seuils de détection, alors que la conversion de la fraction 370°C$^+$ en fraction 370°C$^-$ est négligeable (inférieure à 5% poids); voire tableau 2. Le monoxyde de carbone et/ou dioxyde de carbone et/ou l'eau et/ou l'ammoniac formés lors de l'hydrotraitement sont éliminés par une étape c) de flash et de décantation.

Tableau 2: caractéristiques de la fraction lourde après hydrotraitement.

| | |
|---|---|
| Distillation Simulée | T (5% poids): 172°C<br>T (25% poids): 242°C<br>T (50% poids): 343°C<br>T (75% poids): 441 °C<br>T (95% poids): 568°C |
| composés 370°C$^+$ (par GC) | 41% poids |
| densité à 15°C | 0,797 |
| teneur en azote | < limite détection |
| teneur en soufre | < limite détection |
| analyse détaillée de la fraction $C_{30}^-$ (GC)<br>n-paraffines<br>i-paraffines<br>oléfines<br>oxygénés | <br>91 % poids<br>9% poids<br>< limite détection<br>< limite détection |

L'effluent hydrotraité constitue la charge d'hydrocraquage envoyée selon une étape d) sur le catalyseur d'hydrocraquage C4 conforme à l'invention.

Avant test, le catalyseur C4 subit une étape de réduction dans les conditions opératoires suivantes :

- débit d'hydrogène : 1600 normaux litres par heure et par litre de catalyseur,
- montée de la température ambiante à 120°C : 10°C/min,
- palier d'une heure à 120°C,
- montée de 120°C à 450°C à 5°C/min,
- palier de deux heures à 450°C,
- pression : 1 bar

Après réduction, le test catalytique s'effectue dans les conditions suivantes :

- pression totale de 60 bar,
- rapport $H_2$ sur charge de 1000 normaux litres/litre,
- vitesse volumique horaire (WH) égale à 1 $h^{-1}$

La conversion de la fraction 370°C$^+$ est prise égale à :

$$C(370°C^+) = [\ (\%\ de\ 370°C^-_{effluents}) - (\%\ de\ 370°C^-_{charge})\ ]\ /\ [\ 100 - (\%\ de\ 370°C^-_{charge})]$$

avec
% de 370°C$^-_{effluents}$ = teneur massique en composés ayant des points d'ébullition inférieurs à 370°C dans les effluents, et
% de 370°C$^-_{charge}$ = teneur massique en composés ayant des points d'ébullition inférieurs à 370°C dans la charge d'hydrocraquage

La température de réaction est ajustée de manière à obtenir un niveau de conversion de la fraction 370°C$^+$ égal à 80% en poids.

Selon une étape e), la fraction hydrocraquée est distillée pour obtenir des distillats moyens et la fraction résiduelle bouillant au dessus desdits distillats moyens est recyclée dans l'étape d'hydrocraquage d) conformément à l'invention.

Les analyses par chromatographie en phase gazeuse permettent d'obtenir la distribution des différentes coupes dans l'effluent hydrocraqué (tableau 3):

- coupe $C_1$-$C_4$: hydrocarbures de 1 à 4 atomes de carbone inclus
- coupe $C_5$-$C_9$: hydrocarbures de 5 à 9 atomes de carbone inclus (coupe naphta)
- coupe $C_{10}$-$C_{14}$: hydrocarbures de 10 à 14 atomes de carbone inclus (coupe kérosène)

- coupe $C_{15}$-$C_{22}$: hydrocarbures de 15 à 22 atomes de carbone inclus (coupe gazole)
- coupes $C_{22+}$: hydrocarbures à plus de 22 atomes de carbone inclus (coupe 370°C$^+$).

Tableau 3 : répartition par coupes de l'effluent hydrocraqué (analyse GC).

| | % poids |
|---|---|
| coupe $C_1$-$C_4$ | 2,3 |
| coupe $C_5$-$C_9$ | 19,8 |
| coupe $C_{10}$-$C_{14}$ | 38.7 |
| coupe $C_{15}$-$C_{22}$ | 31.0 |
| coupe $C_{22}{}^+$ | 8,2 |

Ces résultats montrent que l'utilisation d'un catalyseur d'hydroisomérisation et d'hydrocraquage selon l'invention et dans un procédé selon l'invention permet par hydrocraquage et hydroisomérisation d'une charge paraffinique issue du procédé de synthèse Fischer-Tropsch de produire des distillats moyens (kérosène et gazole).

**Revendications**

**1.** Procédé de production de distillats moyens à partir d'une charge paraffinique produite par synthèse Fischer-Tropsch, mettant en oeuvre un catalyseur d'hydrocraquage et d'hydroisomérisation comprenant au moins un métal hydro-déshydrogénant choisi dans le groupe formé par les métaux du groupe VIB et du groupe VIII de la classification périodique et un support comprenant au moins un solide cristallisé IZM-2 présentant un diagramme de diffraction des rayons X incluant au moins les raies inscrites dans le tableau ci-dessous :

| 2 thêta (°) | dhkl (Å) | Irel | 2 thêta (°) | dhkl (Å) | Irel |
|---|---|---|---|---|---|
| 5,07 | 17,43 | ff | 19,01 | 4,66 | ff |
| 7,36 | 12,01 | FF | 19,52 | 4,54 | ff |
| 7,67 | 11,52 | FF | 21,29 | 4,17 | m |
| 8,78 | 10,07 | F | 22,44 | 3,96 | f |
| 10,02 | 8,82 | ff | 23,10 | 3,85 | mf |
| 12,13 | 7,29 | ff | 23,57 | 3,77 | f |
| 14,76 | 6,00 | ff | 24,65 | 3,61 | ff |
| 15,31 | 5,78 | ff | 26,78 | 3,33 | f |
| 15,62 | 5,67 | ff | 29,33 | 3,04 | ff |
| 16,03 | 5,52 | ff | 33,06 | 2,71 | ff |
| 17,60 | 5,03 | ff | 36,82 | 2,44 | ff |
| 18,22 | 4,87 | ff | 44,54 | 2,03 | ff |

où FF = très fort ; F = fort ; m = moyen ; mf = moyen faible ; f = faible ; ff = très faible et présentant une composition chimique, exprimée sur une base anhydre, en termes de moles d'oxydes, par la formule générale suivante : $XO_2$ : $aY_2O_3$ : $bM_{2/n}O$ dans laquelle X représente au moins un élément tétravalent, Y représente au moins un élément trivalent et M est au moins un métal alcalin et/ou un métal alcalino-terreux de valence n, a et b représentant respectivement le nombre de moles de $Y_2O_3$ et $M_{2/n}O$ et a est compris entre 0 et 0,5 et b est compris entre 0 et 1; ledit solide cristallisé IZM-2 étant préparé en faisant réagir un mélange aqueux appelé gel comportant au moins une source d'au moins un oxyde $XO_2$, éventuellement au moins une source d'au moins un oxyde $Y_2O_3$, éventuellement au moins une source d'au moins un métal alcalin et/ou alcalino-terreux de valence n, au moins une espèce organique R comportant deux atomes d'azote quaternaires, le mélange présentant la composition molaire suivante:

$XO_2/Y_2O_3$: au moins 2, de préférence au moins 20, de manière plus préférée de 60 à 600,
$H_2O/XO_2$: 1 à 100, de préférence de 10 à 70,
$R/XO_2$: 0,02 à 2, de préférence de 0,05 à 0,5,
$M_{2/n}O/XO_2$: 0 à 1, de préférence de 0,005 et 0,5;
où X est un ou plusieurs élément(s) tétravalent(s) choisi(s) dans le groupe formé par les éléments suivants : silicium, germanium, titane, de préférence le silicium,où Y est un ou plusieurs élément(s) trivalent(s) choisi(s) dans le groupe formé par les éléments suivants: aluminium, fer, bore, indium et gallium, de préférence l'aluminium et où M est un ou plusieurs métal(aux) alcalin(s) et/ou alcalino- terreux choisi(s) parmi le lithium, le sodium, le potassium, le calcium, le magnésium et le mélange d'au moins deux de ces métaux de préférence le sodium; le gel obtenu étant soumis à un traitement hydrothermal sous une pression de réaction autogène, à une température comprise entre 120°C et 200°C jusqu'à ce que ledit solide cristallisé IZM-2 se forme,
puis à l'issue du traitement hydrothermal conduisant à la cristallisation dudit solide IZM-2, la phase solide est calcinée par une ou plusieurs étapes de chauffage réalisée à une température comprise entre 100 et 1000°C pour une durée comprise entre 3 heures et 48 heures.

**2.** Procédé selon la revendication 1 dans lequel X est le silicium.

**3.** Procédé selon la revendication 1 ou la revendication 2 dans lequel Y est l'aluminium.

**4.** Procédé selon les revendications 1 à 3 dans lequel catalyseur d'hydrocraquage et hydroisomérisation comprend 0,1 à 60% d'au moins un métal hydro-déshydrogénant choisi dans le groupe formé par les métaux du groupe VIB et du groupe VIII, et de 40 à 99,9% d'un support comprenant :

0 à 99% d'au moins un liant minéral poreux amorphe ou mal cristallisé de type oxyde
0,01 à 60% d'un solide cristallisé de type IZM-2, les pourcentages étant exprimés en pourcentage poids par rapport à la masse totale du catalyseur.

**5.** Procédé selon l'une des revendications 1 à 4 dans lequel les éléments du groupe VIII sont choisis parmi le platine et le palladium.

**6.** Procédé selon l'une des revendications 1 à 4 dans lequel les éléments du groupe VIII sont choisis parmi le fer, le cobalt et le nickel.

**7.** Procédé selon l'une des revendications 1 à 4 dans lequel les éléments du groupe VIB sont choisis parmi le tungstène et le molybdène.

**8.** Procédé selon l'une des revendications 1 à 7 dans lequel la teneur en élément hydro-déshydrogénant dudit catalyseur choisi dans le groupe formé par les métaux du groupe VIB et du groupe VIII est comprise entre 0,1 et 60% poids par rapport à la masse totale dudit catalyseur.

**9.** Procédé selon l'une des revendications 1 à 8 dans lequel lorsque l'élément hydro-déshydrogénant est un métal noble du groupe VIII, la teneur en métal noble comprise entre 0,05 et 10% poids par rapport à la masse totale dudit catalyseur.

**10.** Procédé selon l'une des revendications 1 à 9 dans lequel ledit catalyseur contient en outre un liant minéral poreux amorphe ou mal cristallisé de type oxyde.

**11.** Procédé selon la revendication 10 dans lequel le liant est de type alumine.

**12.** Procédé selon l'une des revendications 1 à 11 dans lequel ledit procédé opère à une température comprise entre 270 et 400°C, une pression comprise entre 1 et 9 MPa, une vitesse spatiale comprise entre 0,5 et 5 $h^{-1}$, un débit d'hydrogène ajusté pour obtenir un rapport de 400 à 1500 Normaux litres d'hydrogène par litre de charge.

**13.** Procédé selon l'une des revendications 1 à 12 dans lequel ledit procédé comprend les étapes suivantes :

a) séparation d'une seule fraction dite lourde à point d'ébullition initial compris entre 120-200°C,
b) hydrotraitement d'une partie au moins de ladite fraction lourde,
c) fractionnement en au moins 3 fractions :

- au moins une fraction intermédiaire ayant un point d'ébullition initial T1 compris entre 120 et 200°C, et un point d'ébullition final T2 supérieur à 300°C et inférieur à 410°C,
- au moins une fraction légère bouillant au-dessous de la fraction intermédiaire,
- au moins une fraction lourde bouillant au-dessus de la fraction intermédiaire.

d) passage d'une partie au moins de ladite fraction intermédiaire sur un catalyseur hydroisomérisant,
e) passage d'une partie au moins de ladite fraction lourde dans le procédé selon les revendications 1 à 12
f) distillation des fractions hydrocraquées et hydroisomérisées pour obtenir des distillats moyens, et recyclage de la fraction résiduelle bouillant au-dessus desdits distillats moyens dans l'étape (e).

**Patentansprüche**

1. Verfahren zur Herstellung von Mitteldestillaten aus einer Paraffinmasse, die durch Fischer-Tropsch-Synthese erzeugt wurde, das einen Hydrocracking- und Hydroisomerisations-Katalysator einsetzt, umfassend mindestens ein hydrierend-dehydrierendes Metall, das aus der Gruppe ausgewählt ist, die von den Metallen der Gruppe VIB und der Gruppe VIII des Periodensystems gebildet ist, und einen Träger, umfassend mindestens einen kristallisierten Feststoff IZM-2, der ein Röntgenbeugungsdiagramm aufweist, das mindestens die in der untenstehenden Tabelle eingetragenen Linien einschließt:

| 2 thêta (°) | dhkl (Å) | Irel | 2 thêta (°) | dhkl (Å) | Irel |
|---|---|---|---|---|---|
| 5,07 | 17,43 | ff | 19,01 | 4,66 | ff |
| 7,36 | 12,01 | FF | 19,52 | 4,54 | ff |
| 7,67 | 11,52 | FF | 21,29 | 4,17 | m |
| 8,78 | 10,07 | F | 22,44 | 3,96 | f |
| 10,02 | 8,82 | ff | 23,10 | 3,85 | mf |
| 12,13 | 7,29 | ff | 23,57 | 3,77 | f |
| 14,76 | 6,00 | ff | 24,65 | 3,61 | ff |
| 15,31 | 5,78 | ff | 26,78 | 3,33 | f |
| 15,62 | 5,67 | ff | 29,33 | 3,04 | ff |
| 16,03 | 5,52 | ff | 33,06 | 2,71 | ff |
| 17,60 | 5,03 | ff | 36,82 | 2,44 | ff |
| 18,22 | 4,87 | ff | 44,54 | 2,03 | ff |

wobei FF = sehr stark; F = stark; m = mittel; mf = mittel schwach; f = schwach; ff = sehr schwach, und das eine chemische Zusammensetzung, ausgedrückt auf wasserfreier Basis, in Molen von Oxiden durch die folgende allgemeine Formel: $XO_2$:$aY_2O_3$:$bM_{2/n}O$, bei der X mindestens ein tetravalentes Element darstellt, Y mindestens ein trivalentes Element darstellt und M mindestens ein alkalisches Metall und/oder ein erdalkalisches Metall mit einer Wertigkeit n ist,
wobei a und b die Molzahl von $Y_2O_3$ bzw. $M_{2/n}O$ darstellen und a zwischen 0 und 0,5 beträgt und b zwischen 0 und 1 beträgt;
wobei der kristallisierte Feststoff IZM-2 hergestellt wird, wobei ein wässeriges Gemisch, Gel genannt, umfassend mindestens eine Quelle von mindestens einem Oxid $XO_2$, mindestens eine Quelle von mindestens einem Oxid $Y_2O_3$, eventuell mindestens eine Quelle von mindestens einem alkalischen und/oder erdalkalischen Metall der Wertigkeit n, mindestens eine organische Gattung R, umfassend zwei quaternäre Stickstoffatome, zur Reaktion gebracht wird, wobei das Gemisch die folgende Molzusammensetzung aufweist:

$XO_2/Y_2O_3$: mindestens 2, vorzugsweise mindestens 20, noch bevorzugter 60 bis 600,
$H_2O/XO_2$: 1 bis 100, vorzugsweise 10 bis 70,
$R/XO_2$: 0,02 bis 2, vorzugsweise 0,05 bis 0,5,
$M_{2/n}O/XO_2$: 0 bis 1, vorzugsweise 0,005 und 0,5;

wobei X ein oder mehrere tetravalente(s) Element(e) ist, ausgewählt aus der Gruppe, die von den folgenden Elementen gebildet ist: Silizium, Germanium, Titan, vorzugsweise Silizium, bei dem Y ein oder mehrere trivalente(s) Element(e) ist, ausgewählt aus der Gruppe, die von den folgenden Elementen gebildet ist: Aluminium, Eisen, Bor, Indium und Gallium, vorzugsweise Aluminium, und wobei M ein oder mehrere alkalische(s) und/oder erdalkalische(s) Metall(e), ausgewählt unter Lithium, Natrium, Kalium, Kalzium, Magnesium und dem Gemisch mindestens zweier dieser Metalle, vorzugsweise Natrium;
wobei das erhaltene Gel einer Hydrothermalbehandlung unter einem autogenen Reaktionsdruck bei einer Temperatur zwischen 120°C und 200°C unterzogen wird, bis sich der kristallisierte Feststoff IZM-2 bildet,
dann nach der Hydrothermalbehandlung, die zur Kristallisierung des Feststoffes IZM-2 führt, die feste Phase durch einen oder mehrere Heizschritte, die bei einer Temperatur zwischen 100 und 1000°C über eine Dauer zwischen 3 Stunden und 48 Stunden durchgeführt wird, kalziniert wird.

**2.** Verfahren nach Anspruch 1, bei dem X Silizium ist.

**3.** Verfahren nach Anspruch 1 oder Anspruch 2, bei dem Y Aluminium ist.

**4.** Verfahren nach den Ansprüchen 1 bis 3, bei dem der Hydrocracking- und Hydroisomerisations-Katalysator 0,1 bis 60% mindestens eines hydrierenddehydrierenden Metalls, das aus der Gruppe ausgewählt ist, die von den Metallen der Gruppe VIB und der Gruppe VIII gebildet ist, und 40 bis 99,9% eines Trägers umfasst, umfassend:

0 bis 99% mindestens eines amorphen oder wenig kristallisierten porösen mineralischen Bindemittels vom Typ Oxid
0,01 bis 60% eines kristallisierten Feststoffes vom Typ IZM-2, wobei die Prozentsätze in Gewichtsprozent bezogen auf die Gesamtmasse des Katalysators ausgedrückt sind.

**5.** Verfahren nach einem der Ansprüche 1 bis 4, bei dem die Elemente der Gruppe VIII unter Platin und Palladium ausgewählt sind.

**6.** Verfahren nach einem der Ansprüche 1 bis 4, bei dem die Elemente der Gruppe VIII unter Eisen, Kobalt und Nickel ausgewählt sind.

**7.** Verfahren nach einem der Ansprüche 1 bis 4, bei dem die Elemente der Gruppe VIB unter Wolfram und Molybdän ausgewählt sind.

**8.** Verfahren nach einem der Ansprüche 1 bis 7, bei dem der Gehalt an hydrierend-dehydrierendem Element des Katalysators, ausgewählt aus der Gruppe, die von den Metallen der Gruppe VIB und der Gruppe VIII gebildet ist, zwischen 0,1 und 60 Gew.-% bezogen auf die Gesamtmasse des Katalysators beträgt.

**9.** Verfahren nach einem der Ansprüche 1 bis 8, bei dem, wenn das hydrierenddehydrierende Element ein Edelmetall der Gruppe VIII ist, der Gehalt an Edelmetall zwischen 0,05 und 10 Gew.-% bezogen auf die Gesamtmasse des Katalysators beträgt.

**10.** Verfahren nach einem der Ansprüche 1 bis 9, bei dem der Katalysator ferner ein amorphes oder wenig kristallisiertes poröses Bindemittel vom Typ Oxid enthält.

**11.** Verfahren nach Anspruch 10, bei dem das Bindemittel vom Typ Aluminiumoxid ist.

**12.** Verfahren nach einem der Ansprüche 1 bis 11, bei dem das Verfahren bei einer Temperatur zwischen 270 und 400°C, einem Druck zwischen 1 und 9 MPa, einer Raumgeschwindigkeit zwischen 0,5 und 5 $h^{-1}$, einer Wasserstoffmenge, die eingestellt ist, um ein Verhältnis von 400 bis 1500 Normalliter Wasserstoff pro Liter Masse zu erhalten, arbeitet.

**13.** Verfahren nach einem der Ansprüche 1 bis 12, wobei das Verfahren die folgenden Schritte umfasst:

a) Abtrennung einer einzigen so genannten schweren Fraktion mit einem Anfangssiedepunkt zwischen 120-200°C,
b) Hydrobehandlung mindestens eines Teils der schweren Fraktion,
c) Fraktionierung in mindestens 3 Fraktionen:

- mindestens eine Zwischenfraktion mit einem Anfangssiedepunkt T1 zwischen 120 und 200°C und einem Endsiedepunkt T2 über 300°C und unter 410°C,
- mindestens eine leichte Fraktion, die unter der Zwischenfraktion siedet,
- mindestens eine schwere Fraktion, die über der Zwischenfraktion siedet,

d) Durchleiten mindestens eines Teils der Zwischenfraktion durch einen Hydroisomerisations-Katalysator,
e) Durchleiten mindestens eines Teils der schweren Fraktion durch das Verfahren nach den Ansprüchen 1 bis 12,
f) Destillation der hydrogecrackten und hydroisomerisierten Fraktionen, um Mitteldestillate zu erhalten, und Rezyklieren der Restfraktion, die über den Mitteldestillaten in Schritt (e) siedet.

## Claims

**1.** A process for producing middle distillates from a paraffinic feedstock produced by Fischer-Tropsch synthesis, using a hydrocracking and hydroisomerisation catalyst comprising at least one hydro-dehydrogenating metal selected from the group formed by metals of group VIB and group VIII of the periodic table and a support comprising at least one crystallised IZM-2 solid exhibiting an X-ray diffraction pattern including at least the rays set out in the following table :

| 2 theta (°) | dhkl (Å) | Irel | 2 theta (°) | dhkl (Å) | Irel |
|---|---|---|---|---|---|
| 5.07 | 17.43 | ff | 19.01 | 4.66 | ff |
| 7.36 | 12.01 | FF | 19.52 | 4.54 | ff |
| 7.67 | 11.52 | FF | 21.29 | 4.17 | m |
| 8.78 | 10.07 | F | 22.44 | 3.96 | f |
| 10.02 | 8.82 | ff | 23.10 | 3.85 | mf |
| 12.13 | 7.29 | ff | 23.57 | 3.77 | f |
| 14.76 | 6.00 | ff | 24.65 | 3.61 | ff |
| 15.31 | 5.78 | ff | 26.78 | 3.33 | f |
| 15.62 | 5.67 | ff | 29.33 | 3.04 | ff |
| 16.03 | 5.52 | ff | 33.06 | 2.71 | ff |
| 17.60 | 5.03 | ff | 36.82 | 2.44 | ff |
| 18.22 | 4.87 | ff | 44.54 | 2.03 | ff |

wherein FF = very strong; F = strong; m = moderate; mf = moderately weak; f = weak; ff = very weak and having a chemical composition expressed on an anhydrous basis, in terms of moles of oxides, by the following general formula: $XO_2 : aY_2O_3 : bM_{2/n}O$ in which X represents at least one tetravalent element, Y represents at least one trivalent element and M is at least one alkali metal and/or an alkaline earth metal of valency n, a and b respectively representing the number of moles of $Y_2O_3$ and $M_{2/n}O$ and a is between 0 and 0.5 and b is between 0 and 1;
said crystallised IZM-2 solid being prepared by reacting an aqueous mixture referred to as a gel comprising at least one source of at least one oxide $XO_2$, optionally at least one source of at least one oxide $Y_2O_3$, optionally at least one source of at least one alkali metal and/or alkaline earth metal of valency n, at least one organic species R comprising two quaternary nitrogen atoms, the mixture being of the following molar composition :

$XO_2/Y_2O_3$: at least 2, preferably at least 20, more preferably 60 to 600,
$H_2O/XO_2$: 1 to 100, preferably 10 to 70,
$R/XO_2$: 0.02 to 2, preferably 0.05 to 0.5, and
$M_{2/n}O/XO_2$: 0 to 1, preferably 0.005 to 0.5;
wherein X is one or more tetravalent elements selected from the group formed by the following elements: silicon, germanium, titanium, preferably silicon, wherein Y is one or more trivalent elements selected from the group formed by the following elements: aluminium, iron, boron, indium and gallium, preferably aluminium, and wherein M is one or more alkali metal and/or alkaline earth metals selected from lithium, sodium, potassium, calcium,

magnesium and the mixture of at least two of said metals, preferably sodium;
the gel obtained being subjected to a hydrothermal treatment under an autogenous reaction pressure at a temperature of between 120°C and 200°C until said crystallised IZM-2 solid is formed,
then at the end of the hydrothermal treatment leading to crystallisation of said IZM-2 solid the solid phase is calcined by one or more heating steps performed at a temperature of between 100 and 1000°C for a period of between 3 hours and 48 hours.

**2.** A process according to claim 1 wherein X is silicon.

**3.** A process according to claim 1 or claim 2 wherein Y is aluminium.

**4.** A process according to claims 1 to 3 wherein the hydrocracking and hydroisomerisation catalyst comprises 0.1 to 60% of at least one hydro-dehydrogenating metal selected from the group formed by the metals of group VIB and group VIII, and 40 to 99.9% of a support comprising :

0 to 99% of at least one amorphous or poorly crystallised porous mineral binder of oxide type,
0.01 to 60% of a crystallised solid of type IZM-2, the percentages being expressed in a percentage by weight with respect to the total mass of the catalyst.

**5.** A process according to one of claims 1 to 4 wherein the elements of group VIII are selected from platinum and palladium.

**6.** A process according to one of claims 1 to 4 wherein the elements of group VIII are selected from iron, cobalt and nickel.

**7.** A process according to one of claims 1 to 4 wherein the elements of group VIB are selected from tungsten and molybdenum.

**8.** A process according to one of claims 1 to 7 wherein the amount of hydro-dehydrogenating element of the catalyst selected from a group formed by the metals of group VIB and group VIII is between 0.1 and 60% by weight with respect to the total mass of said catalyst.

**9.** A process according to one of claims 1 to 8 wherein when the hydro-dehydrogenating element is a noble metal of group VIII the content of noble metal is between 0.05 and 10% by weight with respect to the total mass of said catalyst.

**10.** A process according to one of claims 1 to 9 wherein said catalyst also contains an amorphous or poorly crystallised porous mineral binder of oxide type.

**11.** A process according to claim 10 wherein the binder is of alumina type.

**12.** A process according to one of claims 1 to 11 wherein said process is performed at a temperature of between 270 and 400°C, at a pressure of between 1 and 9 MPa, with a space velocity of between 0.5 and 5 $h^{-1}$, and with a hydrogen flow rate adjusted to obtain a ratio of 400 to 1500 normal litres of hydrogen per litre of feedstock.

**13.** A process according to one of claims 1 to 12 wherein said process comprises the following steps:

a) separating a single fraction, referred to as the heavy fraction, having an initial boiling point of between 120 and 200°C,
b) hydrotreating a part at least of said heavy fraction,
c) fractionating into at least 3 fractions:

- at least one intermediate fraction having an initial boiling point T1 of between 120 and 200°C and a final boiling point T2 of higher than 300°C and lower than 410°C,
- at least one light fraction boiling below the intermediate fraction, and
- at least one heavy fraction boiling above the intermediate fraction,

d) passing a part at least of said intermediate fraction over a hydroisomerising catalyst,
e) passing a part at least of said heavy fraction in the process according to claims 1 to 12, and
f) distilling the hydrocracked and hydroisomerised fractions to obtain middle distillates, and recycling the residual

fraction boiling above said middle distillates to step (e).

FIG. 1

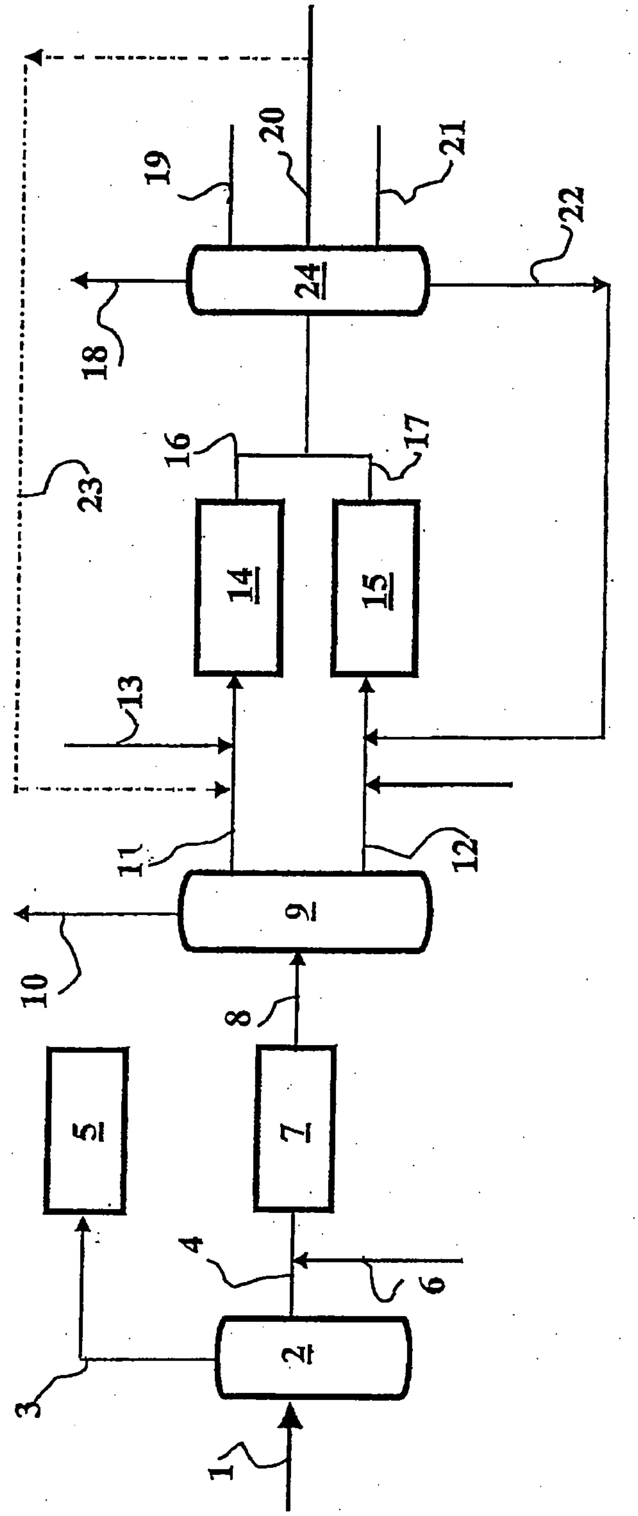

FIG. 2

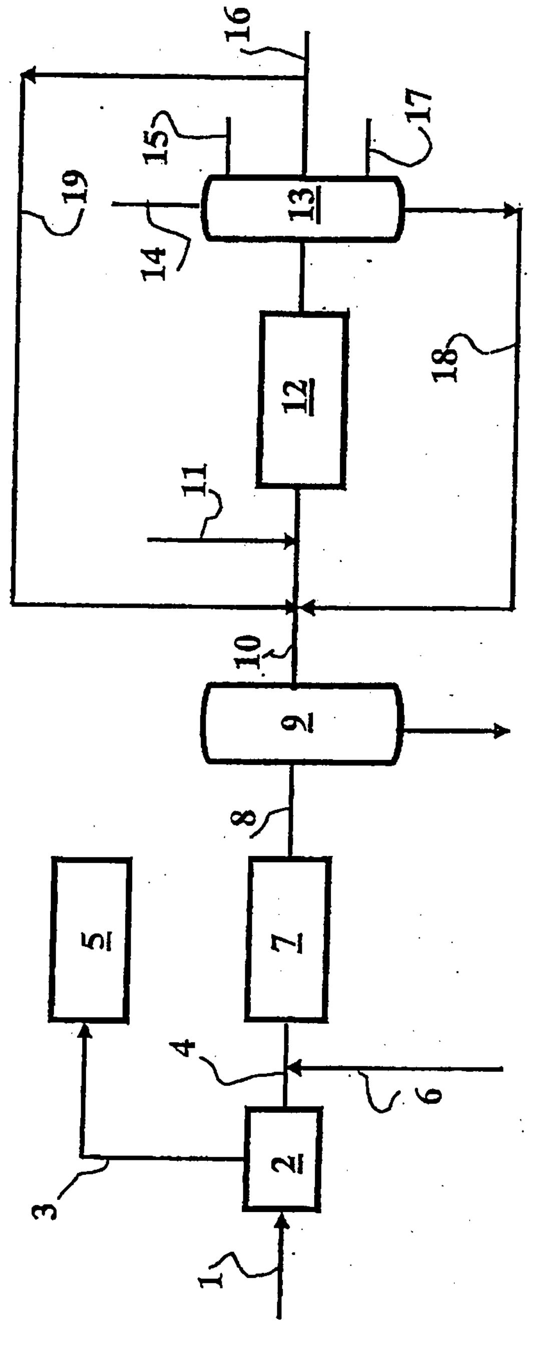

FIG. 3

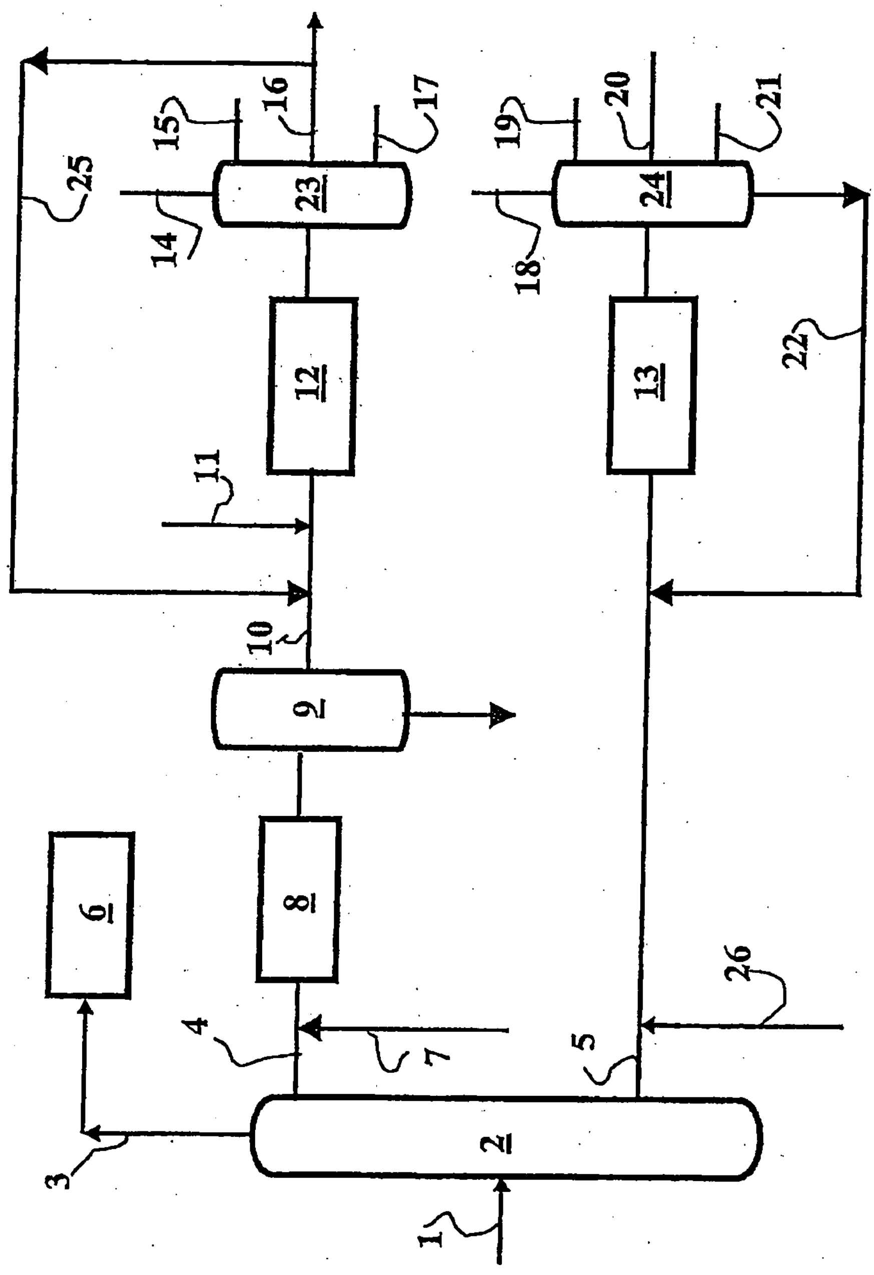

FIG.4

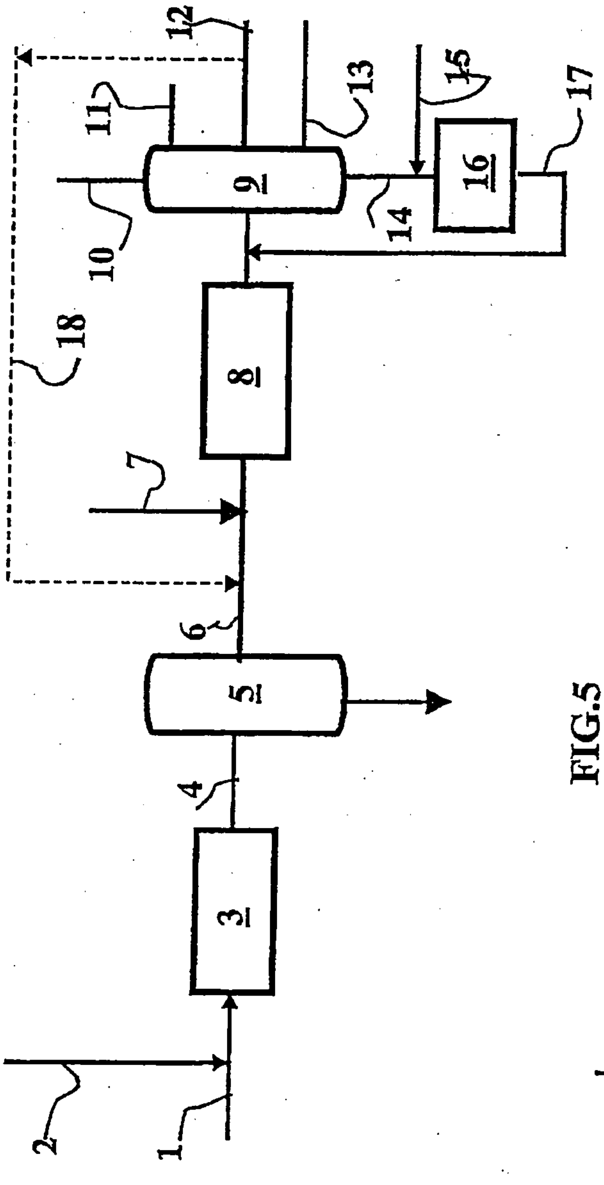
1
2
3
4
5
6
7
8
9
10
11
12
13
14
15
16
17
18

FIG.5

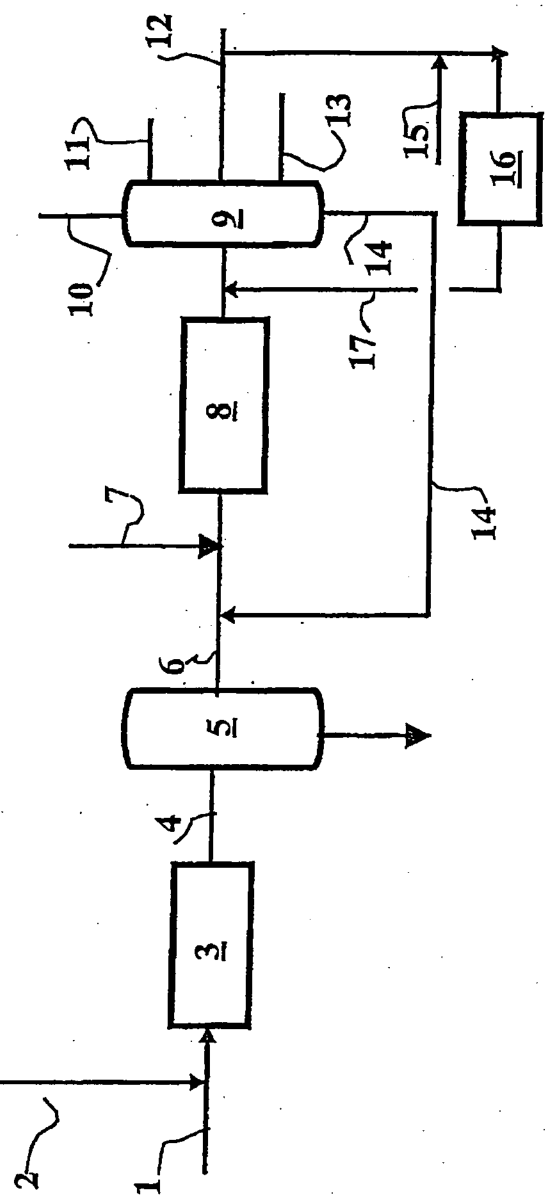
1
2
3
4
5
6
7
8
9
10
11
12
13
14
15
16
17
14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 6733657 B
- FR 1261182 B
- FR 1381282 B
- EP 15196 A
- EP 0387109 A
- EP 297949 A

### Littérature non-brevet citée dans la description

- **W. M MEIER ; D. H. OLSON ; CH. BAERLOCHER.** Atlas of Zeolite Structure Types. Elsevier, 2001